# EUROPEAN PATENT APPLICATION

(11) **EP 1 427 144 A1**
(43) Date of publication of application: **09.06.2004**
(21) Application number: 02772851.8
(22) Date of filing: 13.09.2002
(51) Int. Cl.: H04L 12/28, H04N 7/15

(54) **NETWORK INFORMATION PROCESSING SYSTEM AND INFORMATION PROCESSING METHOD**

(30) Priority: 14.09.2001 JP 2001280597; 14.09.2001 JP 2001280598; 14.09.2001 JP 2001280599; 14.09.2001 JP 2001280600
(71) Applicant: Sony Corporation, Tokyo 141-0001 (JP)
(72) Inventor: KOBAYASHI, Youichi, c/o SONY CORPORATION, Tokyo 141-0001 (JP); UJISATO, Takanobu, c/o SONY CORPORATION, Tokyo 141-0001 (JP); NAGAYASU, Masafumi, c/o SONY CORPORATION, Tokyo 141-0001 (JP); ISOZAKI, Masaaki, c/o SONY CORPORATION, Tokyo 141-0001 (JP); HONDA, Fumitaka, c/o SONY CORPORATION, Tokyo 141-0001 (JP)
(74) Representative: Turner, James Arthur
(86) International application number: PCT/JP2002/009400
(87) International publication number: WO 2003/026217

(57) **Abstract**

The present network electronic conferencing system 101 comprises, as shown in FIG. 4, at least one notebook personal computer PCi (i=1-3), a communicator (3A) or a projector (2A) for processing at least information transferred from this notebook personal computer PCi and providing electric information contents including display information, and an access point (6) for connecting this communicator (3A) to each of the notebook personal computers PCi. The communicator (3A) delivers all at once identification information packets for identifying the projector (2A), the notebook personal computers PCi, the access point (6), etc., while the notebook personal computer PCi displays identification information and selects electronic devices including the communicator (3A) and the other notebook personal computers PCi. It is possible for a user to easily attend his or her intended conference etc.

## Description

### TECHNICAL FIELD

The present invention relates to a network information processing system and an information processing method well applicable to a network electronic conferencing system, a network education system, a network game system, etc. More specifically, it is configured so that, in a case where electronic devices constituting multiple networks are connected to each other on a same network, a main information provision management apparatus delivers identification information packets all at once when it processes network information while each information processing apparatus displays the identification information and selects electronic devices including a sub-information provision management apparatus and other information processing apparatus, thereby allowing each information processing apparatus to automatically recognize the multiple electronic devices that are connected to the network and a conference attendee or the like to participate easily in his or her intended conference etc.

### BACKGROUND ART

Recently, there has often been employed so-called an electronic conferencing form in which a presenter (who brings forth materials) brings into a conference room presentation materials created using a personal computer and presents them to a plurality of conference attendees using an electronic device. In this electronic conferencing form, a display and a notebook personal computer of the presenter are connected to each other. As this display, a data projector is used, to display on it presentation materials created by a personal computer. To the data projector (hereinafter referred to as a projector), a notebook personal computer of presenter himself or herself is connected through an RGB cable, so that a screen displayed on this notebook personal computer is projected to a white wall etc. The presentation materials displayed on the white wall etc. are pointed up by a mouse cursor which is operated by the presenter. That is, only the materials owned by a briefer are displayed on the white wall etc.

Recently, a data projector that can accommodate networks has appeared. This projector has built-in functions of a personal computer. It enables a briefer transferring a presentation file from his notebook personal computer over a network to the projector, so that contents of the file are projected and displayed by the personal-computer functions of the projector.

Note here that according to a conventional electronic conferencing form, if a plurality of network electronic conferencing systems (hereinafter referred to as a network information processing systems also) etc. is constituted of a plurality of notebook personal computers, projectors, TV conferencing apparatuses, etc. that are connected to the same network, the following problems occur.

① If a notebook personal computer of a conference attendee (client) accesses a network, there may occur such an environment that multiple electronic devices etc. having the same functions is accessed simultaneously, for example, a plurality of projectors having the same functions is present in the same segment.

In this situation, before attending the conference, each of the attendees has to specify an appropriate electronic device keeping in mind "to which one of the projectors he or she should access to participate in the conference" or "what kind of the electronic devices is combined to constitute a relevant electronic conferencing system".

If the attendee fails to do so, even when a plurality of electronic conferencing systems is built up, there may occur such a case, for example, that the attendee would participate in a conference in room No. 336 but he or she actually accesses a projector of room No. 301. On the other hand, there may occur such a case that the attendee would operate a TV conferencing apparatus etc. of room No. 336 but he or she actually operates that of room No. 301.

② Suppose here that a case where there is given a network electronic conferencing system wherein a local network electronic conferencing system in which conference attendees in one group use a private IP is connected to a remote network electronic conferencing system in which those in the other group similarly use a private address (hereinafter referred to as a private IP) through a communication cable.

In this case, for the local-side attendees and the remote-side attendees to communicate with each other directly, they have to place access from the network of one private IP over a global network to the network of the other private IP, so that it is difficult to easily build up a network information processing system.

By the way, when a local-side arbitrary attendee at his or her notebook personal computer wishes to engage in file transfer with a remote-side arbitrary attendee at his or her notebook personal computer, files can be transferred from the local side to the remote side if a file transferring side system has a network address translation (NAT) function.

This is because the remote side to which files are transferred has a global IP and the NAT function (access point) automatically replaces a private IP with the global IP. The NAT function refers to a function to mutually translate a private IP address valid in a group and an original global IP address valid in accessing the Internet, to permit a node assigned only a local IP address to access the Internet transparently.

Therefore, channeling from the remote side to the local side involves translation of a global IP into a private IP, so that even if files are transferred from a notebook personal computer (hereinafter referred to as an information processor also) of a remote-side attendee to that of a local-side attendee, the remote side cannot access the local side unless the remote side is also equipped with the NAT function. This makes it difficult to perform mutual communication between an apparatus having a global IP and that having a private IP.

③ Further, to perform teleconferencing between conference rooms each of which has a plurality of network devices installed in it, these network devices must be connected to each other. Note here that disclosure of a data server must be set on the basis of a system policy only to share presentation files. Therefore, to perform teleconferencing, any one of the followings is necessary.
(i) Electronic devices required during a conference must be connected. The conference must be stopped each time these required electronic devices are connected;
(ii) Devices to be utilized must be selected and connected before a conference starts. By doing so, the conference is not stopped but a predetermined lapse of time is required to make preparation and settings beforehand;
(iii) If unexpected materials become necessary and new electronic devices must be connected, the same problems as the above occur;
(iv) Depending on environments for connection to electronic devices and networks, information necessary for connection of the devices becomes different such as IP addresses and telephone numbers; and
(v) Different applications must be activated and operated for connection of devices. Therefore, an operator skilled in the connection of devices needs to be included in the attendees of a conference. It has thus required a considerable lapse of time and an operator skilled in a procedure for the connection of devices to effectively utilize the devices in a conference room when performing teleconferencing between conference rooms each of which has a plurality of network devices installed in it. Therefore, a teleconference suffers from restricted environments more than a conference held in one conference room and so has heavy burdens inflicted thereon other than the conference in order to fulfill the environments.

④ If one network information processing system is located far away from the other to which it is connected, it must be guaranteed that the same contents of a projector displayed in a conference room of the one system are given on a projector in a conference room of the other to which it is connected. The projector itself is a device that can be utilized even if it is not connected over a network. In a case where display contents on the projectors are shared over the network by both of the network information processing systems, the projectors are not always operated after they are connected to the network. That is, to view the same display contents in both of the network information processing systems, synchronization of the display contents upon connection must be indispensable.

It is conceivable that connection may be requested during presentation by use of such the projectors. In this case also, display contents must be synchronized upon the connection in order to share the display contents over the network.

### DISCLOSURE OF THE INVENTION

A network information processing system related to a first aspect of the present invention in which a plurality of network-constituent electronic devices is connected to a same network comprises at least one information processor for processing arbitrary information, information provision management means for processing at least information transferred from the information processor and providing electronic information contents including display information, and communication means for connecting the information provision management means to each of the information processors. To process network information, the information provision management means delivers all at once identification information packets for identifying the network-constituent electronic devices, while the information processor displays identification information and selects electronic devices including the information provision management means and the other information processor.

According to the system related to the first aspect of the present invention, for example, the information provision management means is arranged in a conference room, a classroom, etc., various information processors are prepared in the conference room, the classroom, etc., and they are connected to each other by the communication means. Each of the information processors can automatically recognize a plurality of electronic devices connected over the network. Thus, this allows an attendee related to network information processing to attend his or her intended conference etc. easily and to enter a predetermined information processing system smoothly.

An information processing method related to a second aspect of the present invention for connecting a plurality of network-constituent electronic devices to a same network and processing information comprises the steps of connecting at least one information processor for processing arbitrary information and information provision management means for processing at least information transferred from the information processor and providing electronic information contents including display information by communication means, and, to process network information using the information provision management means, delivering all at once identification information packets for identifying the network-constituent electronic devices, in which the information processor displays identification information and selects electronic devices including the information provision management means and the other information processor.

According to the second aspect of the present invention, when the plurality of network-constituent electronic devices is connected to the same network to process information, each of the information processors can automatically recognize the plurality of electronic devices connected to the network. Therefore, this allows the attendees related to the network information processing to attend his or her intended conference etc. easily and to enter a predetermined information processing system smoothly.

A network information processing system related to a third aspect of the present invention in which a plurality of network-constituent electronic devices is connected to a same network comprises a plurality of network information processing systems, and communication means for connecting the network information processing systems to each other. Each of the network information processing systems comprises at least one information processor for processing arbitrary information and information provision management means for processing information including at least user information transferred from the information processor and providing electronic information contents. The information provision management means permits the network information processing systems to exchange the user information with each other.

According to a system related to the third aspect of the present invention, it is possible to perform easily communication processing such as chats, transfer of information files, etc. directly between an information processor (local-side attendee) belonging to one network information processing system and an information processor (remote-side attendee) belonging to another network information processing system without knowing about complicated settings in a network at all. Moreover, communication processing can be implemented between the local side and the remote side by the same operations for communication between one local side and another without requiring a user to be conscious of remote communication. It is therefore very easy to use for the user.

An information processing method related to a fourth aspect of the present invention for processing information by connecting a plurality of network-constituent electronic devices to a same network comprises the steps of connecting to each other by communication means a plurality of network information processing systems each of which comprises at least one information processor for processing arbitrary information and information provision management means for processing information including at least user information transferred from the information processor and providing electronic information contents, and permitting the network information processing systems connected by the communication means to exchange user information with each other.

According to a method related to the fourth aspect of the present invention, the network information processing systems exchange the user information with each other. Therefore, it is possible for an attendee belonging to one network information processing system and a remote-side attendee belonging to another network information processing system to perform easily communication processing such as chats, transfer of information files, etc. directly to each other using an information processor without knowing about complicated settings in the network at all.

A network information processing system related to a fifth aspect of the present invention in which a plurality of network-constituent electronic devices is connected to a same network comprises a plurality of network information processing systems, and communication means for connecting the network information processing systems to each other. Each of the network information processing systems comprises at least one information processor for processing arbitrary information and information provision management means for processing information including at least user information transferred from the information processor and providing electronic information contents. The information provision management means permits the network information processing systems to exchange connection information about the electronic devices with each other.

According to a system related to the fifth aspect of the present invention, it is possible to share electronic devices belonging to a plurality of network information processing systems and electronic information contents created by these network information processing systems only by specifying an individual identification number of a connection destination without knowing about complicated settings in the network at all. Moreover, remote network information processing system environments can be built up easily. A teleconference etc. can be started up easily.

An information processing method related to a sixth aspect of the present invention for processing information by connecting a plurality of network-constituent electronic devices to a same network comprises the steps of configuring each network information processing system to comprises at least one information processor for processing arbitrary information and information provision management means for processing information including at least user information transferred from the information processor and providing electronic information contents, connecting a plurality of the network information processing systems to each other by communication means, and mutually exchanging connection information about the electronic devices between the network information processing systems.

According to a method related to the sixth aspect of the present invention, it is possible to share electronic devices belonging to a plurality of network information processing systems and electronic information contents created by these network information processing systems only by specifying an individual identification number of a connection destination without knowing about complicated settings in the network at all. Moreover, remote network information processing system environments can be built up easily. A teleconference etc. can be started up easily.

A network information processing system related to a seventh aspect of the present invention in which a plurality of network-constituent electronic devices is connected to a same network comprises a plurality of network information processing systems, and communication means for connecting the network information processing systems to each other. Each of the network information processing systems comprises at least one information processor for processing arbitrary information and information provision management means for processing at least information transferred from the information processor and providing electronic information contents including display information. This information provision management means conducts display-synchronized remote control based on input operations by the information processor.

According to a system related to the seventh aspect of the present invention, control information indicating, for example, "to shut down all image information currently displayed" or "to transfer new information and display electronic information contents" is output from the information processor to the information provision management means. Therefore, the electronic information contents can be displayed between remote locations as synchronized with each other without knowing about complicated settings in the network. It is thus possible to view electronic information contents shared by a plurality of network information processing systems, simultaneously.

An information processing method related to an eighth aspect of the present invention for processing information by connecting a plurality of network-constituent electronic devices to a same network comprises the steps of configuring a plurality of network information processing system, each processing system including at least one information processor having an input operation function to process arbitrary information and information provision management means for processing information transferred from the information processor and providing electronic information contents including display information, connecting the plurality of network information processing systems by communication means, and conducting display-synchronized remote control on the information provision management means based on input operation by the information processor.

According to a method related to the eighth aspect of the present invention, the electronic information contents can be displayed between remote locations as synchronized with each other without knowing about complicated settings in the network. It is thus possible to view electronic information contents shared by a plurality of network information processing systems simultaneously.

### BRIEF DESCRIPTION OF THE DRAWINGS

FIG. 1 is a block diagram for showing a configuration example of a network information processing system 100 according to an embodiment related to the present invention;
FIG. 2 is a flowchart for showing a constitution example of the network information processing system 100;
FIG. 3 is a block diagram for showing a configuration example of a network-type electronic conferencing system 101 according to a first example related to the present invention;
FIG. 4 is a block diagram for showing a configuration example of a network system #1;
FIG. 5 is a block diagram for showing an internal configuration example of a communicator 3A etc.;
FIG. 6 is an image view for showing a display example of a screen P0 upon GUI activation at a notebook personal computer PCi;
FIG. 7 is an image view for showing a display example of a login screen P3 at the notebook personal computer PCi;
FIG. 8 is a block diagram for showing a configuration example of a network-type electronic conferencing system 102 according to a second example related to the present invention;
FIG. 9 is a block diagram for showing a configuration example of an electronic conferencing system 102';
FIG. 10 is an image view for showing a configuration example of an remote electronic conferencing system 103 according to a third example related to the present invention;
FIG. 11 is an image view for showing an example of a GUI-connection confirmation screen P4;
FIG. 12 is a flowchart for showing a processing example (on a local side) at the notebook personal computer PCi;
FIG. 13 is a flowchart for showing a processing example at the communicator 3A:
FIG. 14 is a flowchart for showing a processing example (on a remote side) at the notebook personal computer PCi;
FIG. 15 is an image view for showing a configuration example of a multiple-network type electronic conferencing system 104 according to a fourth example related to the present invention;
FIG. 16A is an image view for showing a display example before an icon for use in a display is selected;
FIG. 16B is an image view for showing a display example after the icon is selected;
FIG. 17 is a flowchart for showing a selection example of the icon for use in the display;
FIG. 18A is an image view for showing a control example (No. 1) of a transparent window according to a fifth example related to the present invention;
FIG. 18B is an image view for showing a control example (No. 2) of the transparent window;
FIG. 19 is a transition diagram for showing a control example of the transparent window at the time of file transfer in the electronic conferencing system 102 etc.;
FIG. 20 is an image view for showing a configuration example of a remote electronic conferencing system 106 according to a sixth example related to the present invention;
FIG. 21A is an image view for showing a display example on a projector 2A of the system #1;
FIG. 21B is an image view for showing a display example on a projector 2B of a system #2;
FIG. 22 is a flowchart for showing an example of display-synchronized remote control in the remote electronic conferencing system 106;
FIG. 23 is a characteristics graph for showing an example of data transfer in the electronic conferencing system 101 according to a seventh example related to the present invention;
FIG. 24 is a flowchart for showing a processing example at the time of data transfer at the notebook personal computer PCi; and
FIG. 25 is an image view for showing a configuration example of an electronic conferencing system 108 according to an eighth example related to the present invention.

### BEST MODE FOR CARRYING OUT THE INVENTION

To solve the conventional problems, the present invention has been developed, and it is an object of the present invention to provide a network information processing system and an information processing method for enabling each of the information processors to automatically recognize a plurality of electronic devices connected to a network and a conference attendee etc. to easily attend his or her intended conference etc.

It is another object of the present invention to provide a network information processing system and an information processing method for enabling chats, information files, etc. to be transferred directly between an information processor belonging to one network information processing system and an information processor belonging to another network information processing system without knowing about complicated settings in a network at all.

It is a further object of the present invention to provide a network information processing system and an information processing method for enabling to be shared electronic devices belonging to a plurality of network information processing systems and electronic information contents created by these network information processing systems without knowing about complicated settings in a network at all.

It is a still further object of the present invention to provide a network information processing system and an information processing method for enabling synchronized electronic information contents to be displayed between remote locations and electronic information contents shared by a plurality of network information processing systems to be simultaneously viewed.

The following will describe one embodiment of a network information processing system and a information processing method related to the present invention respectively with reference to the drawings.

### (1) Embodiment

According to the present embodiment, a plurality of network information processing systems is connected to each other by communication means so that the network information processing systems may exchange user information with each other. Accordingly, an information processor belonging to one network information processing system and that belonging to another network information processing system can transfer chats, information files, etc. directly to each other without knowing about complicated settings in a network at all. Besides, the present invention enables a user to implement communication processing between a local location and a remote location by the same operations as those in the case of communication processing between one local location and another without requiring him or her to be conscious of the remote communication.

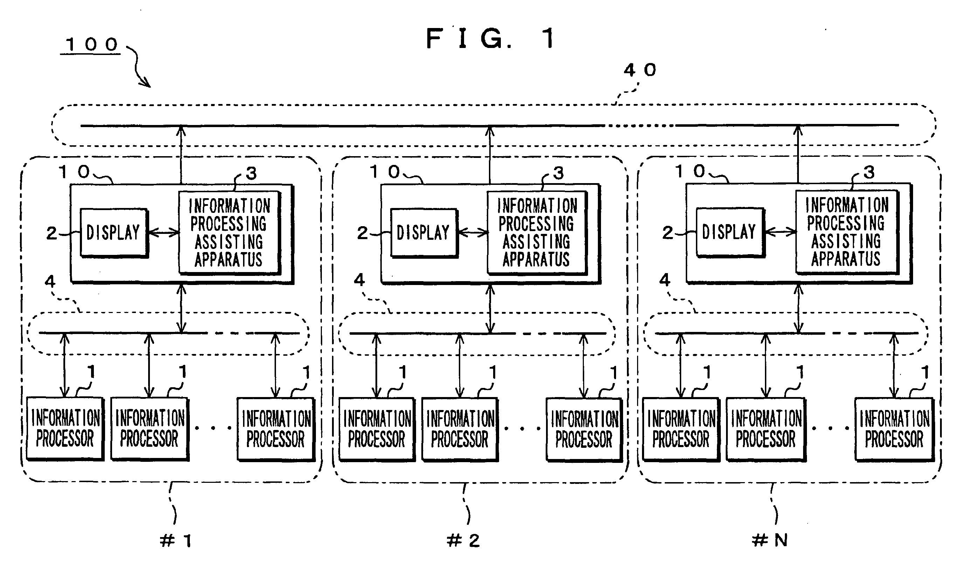

A network information processing system 100 shown in FIG. 1 is an information processing system in which a plurality of network-constituent electronic devices is connected to a same network and configured to connect a plurality of network information processing systems #n (n=1-N) to each other so that information can be processed. This system 100 is well applicable to a network conferencing system, a network education system, a network game system, etc.

In each network information processing system #n, information provision management means 10 is arranged in a specific region or a specific place such as a conference room and at least one information processor 1 is prepared in the conference room so that the information provision management means 10 and each of the information processors 1 are connected to each other by communication means 4, thus enabling the information provision management means 10 to be remotely controlled on the basis of an operation instruction from any one of these information processors 1. The network information processing system #n having such a configuration is connected to another network information processing system #n+1 etc. by communication means 40 so that network processing can be performed between a local side and remote side. When processing network information, the information provision management means 10 in each of network information processing systems #n delivers all at once identification information packets for identifying network-constituent electronic devices. The electronic devices include a TV conferencing apparatus, an information creating apparatus, etc.

In this system 100, the electronic devices are grouped for each network information processing system #n and, for each network information processing system, the information provision management means 10 delivers group identification information at a time to the information processors 1. When having received this, each of the information processors 1 lists and displays the group identification information and selects electronic devices including the information provision management means 10 and the other information processor 1 that belong to another network information processing system #n+1. At the same time, the group identification information is registered in an information processing assisting apparatus 3 for each network information processing system #n.

Group identification information is an abbreviated name relating to network information processing and/or an easy-to-identify-name related to a name indicating a specific region or location and related to a name that is not redundant in another network in same segment. It is thus possible for an attendee to identify target information processing easily. An extension is attached to the group identification information to define extended group identification information, based on which the electronic devices connected to a network are identified. It is thus possible to set notebook personal computer names simultaneously with group identification information setting so that they may not be redundant in a network in the same segment even in a case where a plurality of electronic devices having the same group identification information is present there.

In a case where group identification information is set to the network-constituent electronic devices in this system 100, when each of the electronic devices has recognized identification information packets delivered from the information processing assisting apparatus 3 all at once, it checks on whether they agree with the group identification information set to itself and, only if they agree, notifies the information processing assisting apparatus 3 of the presence and electronic device information of itself so that the group identification information of the electronic device itself may be registered in the information processing assisting apparatus 3.

The information processor 1 has a graphic user interface (hereinafter referred to as a GUI function) which is one example of input operation functions and utilizes this GUI function and a mouse operation function to process arbitrary information. As the information processor 1, an easy-to-carry notebook type personal computer (hereinafter abbreviated as a notebook personal computer) is used. To attend an electronic conferencing system etc., a dedicated application is installed in the notebook personal computer. The information provision management means 10 processes at least information transferred from this information processor 1 and provides electronic information contents including display information.

This information provision management means 10 and each of the information processors 1 are connected to each other by the communication means 4 and used. By utilizing the input operation function of the information processor 1, the information provision management means 10 is remote-controlled. The information provision management means 10 has a display 2 and the information processing assisting apparatus 3. The information processing assisting apparatus 3 is present in a range that can be accessed first from the information processor 1 and plays a central role in network information processing. The information processing assisting apparatus 3 assists electronic information processing including the display 2 based on a remote-control instruction from the information processor 1. The information processing assisting apparatus 3 has personal computer functions and so processes information by the input operation function of the information processor 1.

The display 2 displays images based on information obtained from the information processor 1. In this system 100, when the network-constituent electronic devices other than the information processing assisting apparatus 3 are selected, such electronic devices whose group identification information is selected at the information processor 1 are all displayed. As the display 2, a projector, a flat-panel display or the like is used. The projector projects a color image to a white wall etc. based on RGB signals. As the flat-panel display, a plasma display etc. is used which is capable of enlarging a display screen.

In this system 100, in which the information processing assisting apparatus 3 is equipped with a wireless communication function, such cases are assumed that each of the information processors 1 is also equipped with the wireless communication function to constitute the communication means 4, that a wireless apparatus is provided as an access point to constitute the communication means 4, and that an ordinary communication cable is used to constitute the communication means 4. Of course, they may be combined to constitute a network. As the wireless communication function, a wireless LAN card is used. When a wireless LAN card is used, the information processing assisting apparatus 3 and each of the information processors 1 can be connected to each other in a peer-to-peer mode in a specific region or location. The access point is rendered unnecessary.

In this system 100, each of the information processors 1 is assigned an IP address, which is one example of individual identification information, so that based on the IP address, the information processing assisting apparatus 3 manages and controls the information processors 1. This is because by doing so, it can recognize the network-constituent electronic devices connected to the same network and the information processors 1 of conference attendees etc. It is thus possible to save on global addresses.

In this system 100, to each of the information processors 1, security information is set which is one example of operation-restriction information that can be released by specific key information. By doing so, the information processor 1 in another room, even if it tries to access the information processing assisting apparatus 3 in this conference room, cannot operate this information processing assisting apparatus 3 unless the security information is released, thus preventing access from those unconcerned with a relevant conference etc. That is, unless the security information is released, wireless interception is impossible. By this security system, secretes of the conference can be prevented from being leaked.

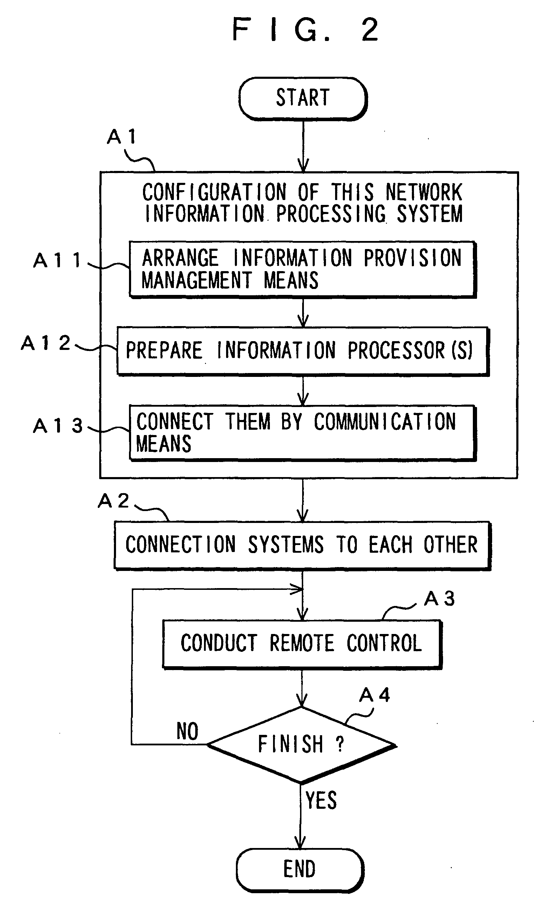

The following will describe an example of information processing in the network information processing system 100. In the present embodiment, it is supposed that information is processed by connecting a plurality of network-constituent electronic devices to a same network. Based on this as processing conditions, this network information processing system #1 is configured at step A1 of a flowchart shown in FIG. 2. For example, at step A11, the information provision management means 10 is arranged in a specific region or location such as a conference room or classroom. The specific region includes a residential area, a unit area of a prefecture or a municipal city, etc. It is thus possible to build up an at-home electronic conferencing system, an at-home education system, a nationwide electronic conferencing system, etc.

The process then goes to step A12 to prepare at least one information processor 1 in this conference room. The process does so in order to provide presentation materials etc. to an electronic conferencing system, an electronic classroom system, etc. and explains them in this system 100. Then, the process goes to step A13 to connect the information provision management means 10 and each of the information processors 1 by the communication means 4. For example, to build up the system #1 in the conference room etc., the process connects the information provision management means 10 and each of the information processors 1 by a wireless LAN card etc.

Then, the process goes to step A2 to connect the systems to each other by the communication means 40. Then, the process goes to steps A3, where the information provision management means 10, when processing network information, delivers all at once identification information packets for identifying the network-constituent electronic devices. Simultaneously, the information processor 1 displays the identification information and selects electronic devices including the information provision management means 3 and the other information processors 1.

Therefore, each of the information processors 1 can automatically recognize the plurality of electronic devices connected to the network. It is thus possible for an attendee related to network information processing to easily attend his or her intended conference etc. and smoothly enter a desired information processing system.

Further, since the information provision management means 10 in each network information processing system #n identifies electronic devices belonging to a same group based on group identification information, an attendee can utilize the network devices without knowing about which of them are related to relevant information processing. Therefore, the attendee, when he or she wishes to attend information processing, can easily attend desired information processing only by selecting his or her intended information processing group in a list of the information processing groups. Note here that only by setting group identification information to electronic devices, device information such as IP addresses is automatically registered, so that equipment and materials can be installed very easily.

### (2) First example

In this first example, a network-type electronic conferencing system 101 is built up by connecting to each other a first network information processing system #1 constituted of a plurality of electronic devices and a second network information processing system #2 constituted of a plurality of other electronic devices so that information can be processed between these two systems (network information processing systems related to the first aspect of the present invention).

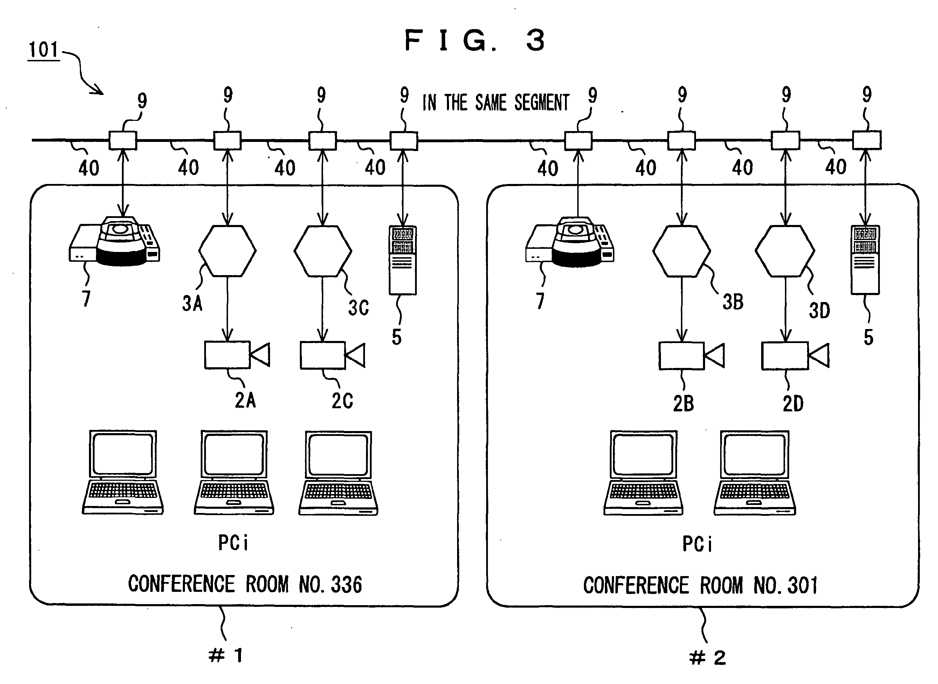

The network-type electronic conferencing system (e-products) 101 shown in FIG. 3 is one example of the network information processing systems and has therein two conference groups of a conference group of conference room No. 323 as the first network information processing system (hereinafter referred to as a network system simply) #1 and a conference group of conference room No. 101 as the second network information processing system (hereinafter referred to as a network system simply) #2.

Each of the conference groups is constituted of main/sub-communicators (information provision management apparatuses) 3A-3D, which basically provide a core conference and are one example of network-constituent electronic devices, and notebook personal computers (information processors) PCi operated by conference attendees, in such a configuration that a projector 2A for displaying presentation materials is connected to the main communicator 3A and, similarly, a projector 2B is connected to the main communicator 3B. A projector 2C is connected to the sub-communicator 3C and a projector 2D is connected to the sub-communicator 3D. In this example, the communicators and the projectors are combined to constitute the information provision management apparatus (presentation apparatus). In some cases, the presentation apparatus may include a creator 5 and a TV conferencing apparatus 7, which are one example of network-constituent electronic devices.

In this electronic conferencing system 101, one conference group system is constituted of devices including the TV conferencing apparatus 7 and the creator 5 that can be controlled by a wireless LAN card. The communicators 3A-3D, the TV conferencing apparatus 7, and the creator 5 of each of the conference groups are connected through line concentrators (HUB) 9 by the communication means 40. Further, the electronic devices of the conference group No. 323 and those of the conference room No. 101 are connected to each other through the communication means 40.

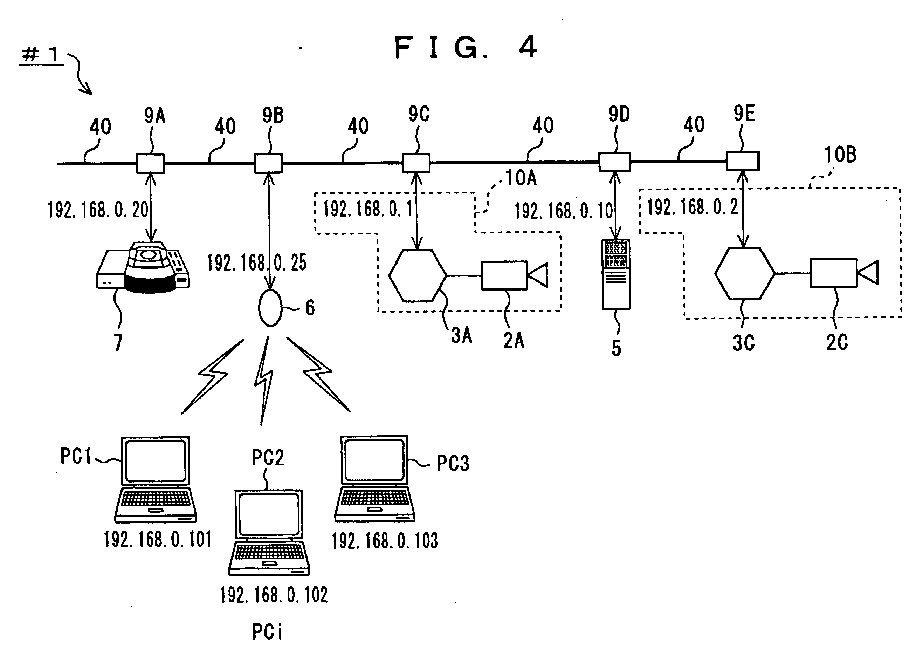

One information processing system #1 shown in FIG. 4 is constituted of nine line concentrators (HUB) 9A-9E, three notebook personal computers PCi (i=1-3), two projectors 2A and 2C for displaying materials, main/sub-communicators 3A and 3C, one TV conferencing apparatus 7 having a wireless LAN function, a creator 5, and an access point (bridge) 6 for wireless LAN communication. The projector 2A is connected to the communicator 3A and the projector 2C is connected to the communicator 3C, respectively, so that images are displayed on the basis of information obtained from the notebook personal computer PCi. For example, the projector 2A projects color images to a white wall etc. based on the RGB signals, to display the presentation materials and the like.

The main communicator 3A is connected through the HUB9C to the communication means 40 and present in a range that can be accessed first by the notebook personal computer PCi and plays a central role in network information processing. The main communicator 3A assists electronic information processing including the projector 2A based on remote-control instructions from the notebook personal computers PCi. The main communicator 3A has the personal computer functions and so processes information by the input operation function of the notebook personal computer PCi. It also manages the conference attendees, processes at least information transferred from the notebook personal computer Pci, and provides electronic information contents including display information.

Further, the main communicator 3A, when processing network information, delivers identification information packets for identifying the network-constituent electronic devices, all at once. For example, in a case where the network-constituent electronic devices are grouped upon system activation, group identification information is delivered to those electronic devices including the notebook personal computer PCi at a time. Specifically, the main communicator 3A delivers all at once identification information packets which identify presence of the main communicator 3A, to the electronic devices in the same segment in the network. This packet contains device information (index indicating the main communicator 3A, IP address, etc.) of the main communicator 3A itself, extended group identification information, etc. In this example, the group identification information is "192.168.0.xxx" and the IP address of the main communicator 3A is "192.168.0.1".

By registering information of the devices fixedly installed in the conference room such as the TV conferencing apparatus 7 and the creator 5 directly in setting information of the main communicator 3A, it is possible to clearly define to which groups the devices belong. The IP address of the TV conferencing apparatus 7 is "192.168.0.20". The creator 5 is connected through the HUB9D to the communication means 40 and it edits contents of the conference and records them. The IP address of the creator 5 is "192.168.0.1".

Group identification information in this case is set by the user. The group identification information is registered in the communicator 3A etc. for each of the network systems #1 and #2. The group identification information is a name easy to identify, for example, a conference room name, an abbreviated name, a name, etc. and not redundant in any other networks in the same segment. With this, the attendee can easily identify target information processing. For example, the group identification information is a conference room "Room336", a conference room "NBS-SL1", etc.

In this group identification information, an extension extended beforehand in a predetermined format is added to define extended group identification information. Based on this extended group identification information, electronic devices connected to the network are identified. With this, even in a case where there is a plurality of electronic devices having the same group identification information, it is possible to set a notebook personal computer name simultaneously with the setting of group identification information so that they may not redundant in a network in the same segment.

For example, in the case of the conference room "Room336", the main communicator 3A is "Room336-M1" and the sub-communicator 3C is "Room336-S1" and, in the case of the conference room "NBS-SL1", they are "NBS-SL1-M1" and "NBS-SL1-S1" respectively. Note here that the sub-communicator 3C is connected through the HUB9E to the communication means 40. The sub-communicator 3C is a device for extension of functions in the future when it aids the main communicator 3A or works with it. The IP address of the sub-communicator 3C is "192.168.0.2". The sub-communicator 3C can be registered on the side of the main communicator 3A automatically by causing the main communicator 3A to recognize the presence of it as far as it can have group identification information set to itself as in the case of an electronic conferencing system.

The TV conferencing apparatus 7 is connected through the HUB9A to the communication means 40. In a case where group identification information is set to a network-constituent electronic device, for example, the TV conferencing apparatus 7 etc. in this system 101, when the TV conferencing apparatus 7 has recognized identification information packets delivered all at once from the main communicator 3A, it checks on whether they agree with that set to the TV conferencing apparatus 7 and, only if they agree, it notifies the main communicator 3A of the presence and electronic device information so that the group identification information of the TV conferencing apparatus 7 may be registered in the main communicator 3A.

In this system 101, each of the notebook personal computers PCi is assigned an IP address, so that based on the IP address, the main communicator 3A manages and controls each notebook personal computer PCi. By doing so, the notebook personal computer PCi of a conference attendee etc. are recognized together with network-constituent electronic devices connected to the same network.

Further, the conference attendee (hereinafter referred to as a client also) uses a notebook personal computer (hereinafter referred to as a client PCi also) equipped with the wireless LAN function to communicate via the access point 6 with each of the devices. The notebook personal computer PCi has the GUI function and so utilizes this GUI function and the mouse operation function to process arbitrary information. When an attendee enters an electronic conferencing system etc., a dedicated application is installed in the notebook personal computer PCi.

In this example, the notebook personal computer PCi of each client, when the program is activated, picks up only group identification information of extended group identification information from identification information packets delivered from the plurality of communicators 3A, 3B, etc. and displayed as listed. The attendee, on the other hand, selects from the list group identification information that corresponds to target information processing, for example, electronic devices including the communicator 3A and the other notebook personal computers PCi etc. that belong to the other network system #2 etc. (information processing method related to the second aspect of the present invention).

Note here that the IP address of a notebook personal computer PC1 is "192.168.0.101", that of a notebook personal computer PC2 is "192.168.0.102", and that of a notebook personal computer PC3 is "192.168.0.103". The access point 6 is connected through the HUB9B to the communication means 40 to connect the main communicator 3A and each notebook personal computer PCi to each other so that communication may be processed. The IP address of the access point 6 is "192.168.0.25".

In this system 101, when network-constituent electronic devices other than the main communicator 3A are selected, group identification information of all the selected electronic devices is displayed at the notebook personal computer PCi. The client PC requests a main communicator 3A corresponding to the selected group identification information to attend a conference. The main communicator 3A, if there is no attendee currently, requests setting of a password required to attend the conference when it logs in and is permitted to attend it by inputting the password. Further, if some one has already entered the electronic conferencing system 101, it confirms a password of this attendee and, only if it agrees with passwords managed by the main communicator 3A, permits him or her to attend the conference.

Actually, it references group identification information of identification information packets delivered from a plurality of main communicators 3A at the same time and, if it agrees with group identification information registered in itself, transfers in a packet an IP address of its own to the delivery-source main communicator 3A to notify it of a device type, an IP address, etc. When having received this packet, the main communicator 3A registers it as a device of its own group. It is thus possible to automatically set device information of information processing such as an IP address only by setting group identification information, so that the user can omit labor of his or her manually setting it on the main communicator 3A.

In this system 101, to each of the notebook personal computers PCi, security information is set that can be released by specific key information. By doing so, even if access is placed from the notebook personal computer PCi in another room to the main communicator 3A or the sub-communicator 3C in the relevant conference room, the main communicator 3A etc. cannot be operated unless the security information is released, so that it is possible to prevent access from being placed by those not concerned with the conference etc. By this security system, secretes of the conference can be prevented from being leaked.

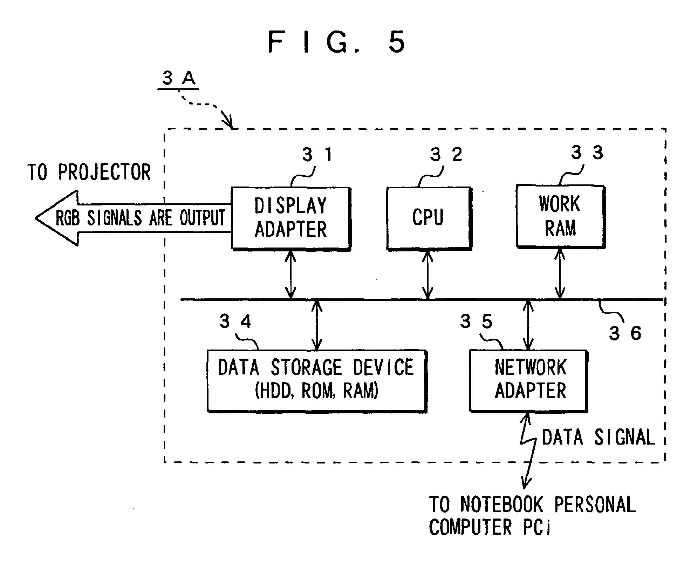

The following will describe an internal configuration example of the communicator 3. The communicator 3A shown in FIG. 5 has the personal computer functions and so processes information by operations of the mouse of the notebook personal computer PCi. The communicator 3A has a data bus 36, to which a display adapter 31, a CPU32, a work RAM33, a data storage device 34, a network adapter 35, etc are connected. The display adapter 31 has a function to process materials to be presented and create RGB signals. The RGB signals based on the presentation materials are output to the projector 2. In the work RAM33, private IP addresses and transfer information related to the presentation materials are stored temporarily.

The data storage device 34 is constituted of a hard disk (HDD), an ROM, and an RAM, which are not shown. The hard disk stores presentation materials. In the ROM, a control program (hereinafter referred to as a system assisting control program) for assisting an electronic conferencing system are written. The system assisting control program is comprised of the operating system which operate the CPU32 and such programs as to process presentation data.

The network adapter 35 is used to receive presentation data and various commands from and transmit them to the notebook personal computer PCi. The CPU32 controls input/output operations of the display adapter 31, the work RAM33, the data storage device 34, the network adapter 35, etc. based on the system assisting control program. By doing so, various programs are processed.

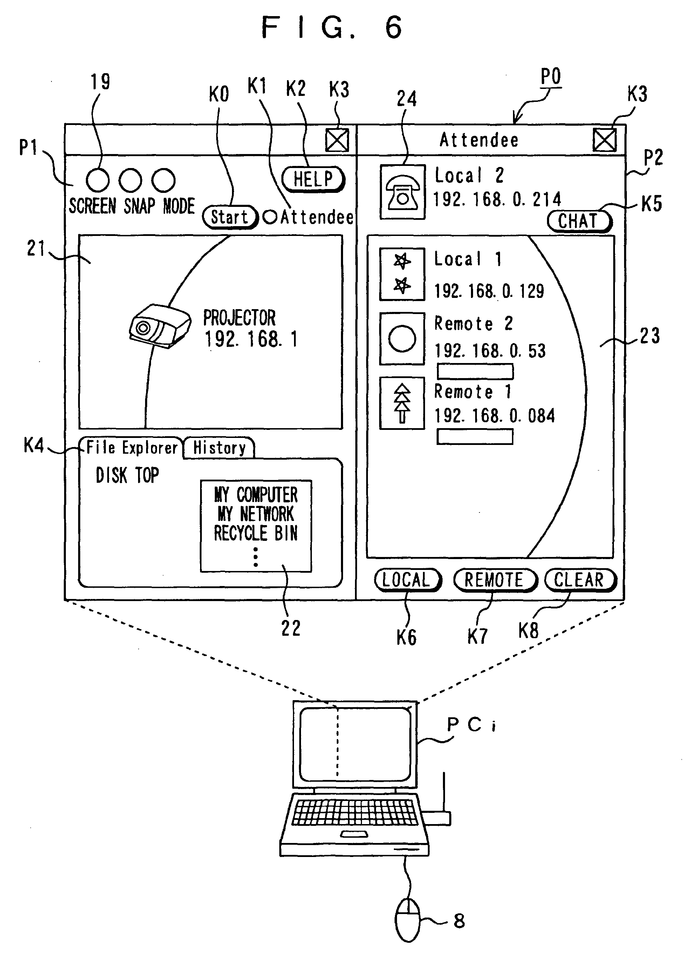

A GUI-activation-time screen P0 shown in FIG. 6 will appear on the notebook personal computer PC1 upon activation and provides an example of display based on a client GUI program. The GUI-activation-time screen P0 employs a divided-into-two display system. On the left side in the screen P0, a GUI-operation screen (hereinafter referred to as a control screen) P1 is displayed and, on the right side in it, an attendee screen P2 is displayed. In this example, on the control screen P1, a selection screen based on a screen-snap mode is displayed.

The control screen P1 has at its midpoint an area for a device icon 21, where an icon of the projector etc. is displayed. Above this area 21, a "start" or "stop" button K0 in the screen-snap mode is displayed. At its neighbor on the right an attendee button K1 is displayed, above it a "HELP" button K2 is displayed, and at the top of an external frame of this control screen P1 a "close" button K3 is displayed. Below the area 21, a tab K4 for "file explorer/history" is displayed to display a file list area 22 in the tab K4. Note here that at the top on the left side in the control screen P1, a logo mark 19 of an enterprise image can be displayed.

The attendee screen P2 is provided at its midpoint with an area 23 for an attendee user list in which conference attendees, IP addresses of their notebook personal computers, etc. are displayed together with an icon. Above this area 23, a user's information area 24 is provided to display an IP address etc. of a specific notebook personal computer PCi on the local side. At the right top in the attendee screen P2, a "chat" button K5 is displayed. Further, at the bottom of the attendee screen P2, a local button K6, a remote button K7, a clear button K8, etc. are displayed.

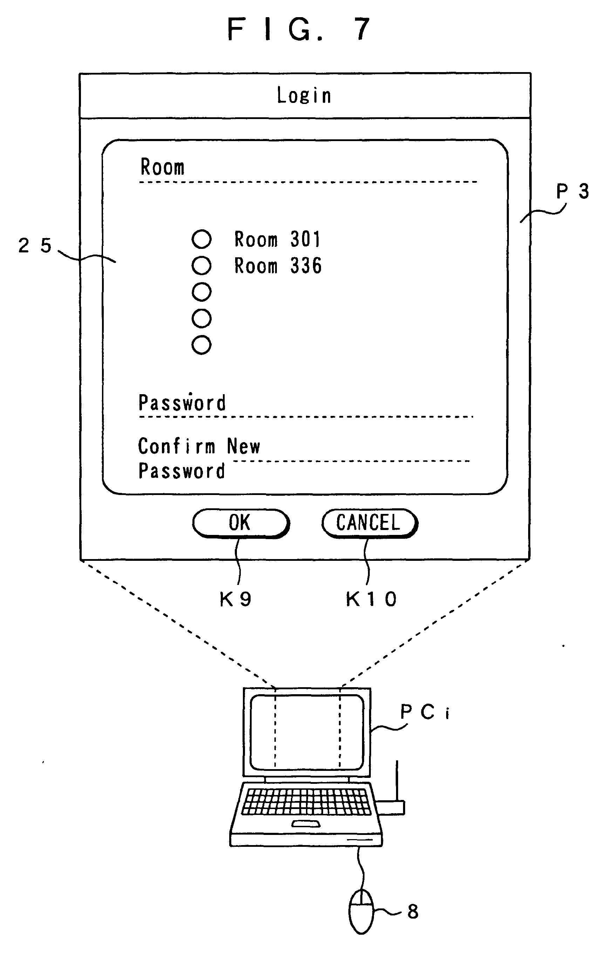

A login screen P3 shown in FIG. 7 will appear upon activation of this electronic conferencing system 101. The login screen P3 is used to enter a conference room which a relevant person attends and his password. The login screen P3 is equipped with a user entry area 25, which user entry area 25 is in turn provided with "Room Name" to enter a conference room number and "password" to enter the password. At the bottom of a window including this user entry area 25, an "OK" button K9 and a "CANCEL" button K10 are arranged.

A password is used to authenticate attendance of a conference and entered in up to 16 half-size alphanumeric characters and symbols. In this electronic conferencing system 101, a first conference attendee, when he or she attends (logs in) the conference first, sets a password. The conference attendee enters a conference room number in the "Room Name" area and then enters the password. For example, he or she places a cursor at "password" and enters the password. The first attendee enters the password twice. The second-time password is entered in "confirm new password". By dong so, the password can be confirmed.

When any attendee other than the first attendee attends the conference (when he or she logs in second or later), he or she enters the password set by the first attendee. He or she needs to enter the password once. Then, by clicking "OK", the setting is completed.

The following will describe an example of transmission/reception processing of group identification information in the network-type electronic conferencing system 101. In this example, it is assumed that a plurality of network-constituent electronic devices is connected to a same network to build up a network-type electronic conferencing system. The case of the conference room "Room336" (network system #1) is described. Further, such a case is assumed that to register a connected device, the main communicator 3A broadcasts the following identification information packets at an interval of five seconds.

| Offset | Size | Electronic Information Contents |
|---|---|---|
| +0 | 2 | Data size 0x0018 (24 bytes in a fixed packet) |
| +2 | 2 | Status |
| +4 | 4 | IP address (IP address of main communicator) |
| +8 | 16 | Group identification information (extended group |
| | | identification information of main communicator) |

At "status", "electronic conferencing system" is written in bit units.

| | |
|---|---|
| 0x0001 | Communicator (main communicator) |
| 0x0002 | Communicator (sub-communicator 1) |
| 0x0004 | Communicator (sub-communicator 2) |
| 0x0008 | TV conferencing apparatus |
| 0x0010 | Creator |

Further, when a network-constituent electronic apparatus, for example, the notebook personal computer PCi etc. has detected the main communicator 3A performing broadcast, it executes the following processing. First, it picks up group identification information from the extended group identification information and checks on whether it agrees with its own group identification information "192.168.0.xxx". Only when it agrees with the group identification information "192.168.0.xxx" registered in it, it sends a reply (response) to the main communicator 3A.

In this electronic conferencing system 101, it transmits the following identification information packet to the main communicator 3A to indicate the presence of itself.

| Offset | Size | Electronic Information Contents |
|---|---|---|
| +0 | 2 | Data size 0x0018 (24 bytes in a fixed packet) |
| +2 | 2 | Identification information |
| +4 | 4 | IP address (IP address of itself) |
| +8 | 16 | Group identification information (extended group |
| | | identification information of electronic conferencing |
| | | system) |

In the above identification information, the group identification information of the network-constituent electronic devices is written. The electronic information contents are as follows.

| | |
|---|---|
| 0x0001 | Communicator (main communicator) |
| 0x0002 | Communicator (sub-communicator 1) |
| 0x0004 | Communicator (sub-communicator 2) |
| 0x0008 | TV conferencing apparatus |
| 0x0010 | Creator |

When having received such information identification packet, the main communicator 3A registers the relevant electronic device as an electronic device of this network-type electronic conferencing system 101 and starts processing that corresponds to each of the devices. By performing periodic communication to the network-constituent electronic devices or by setting time-out for information processing for them, it is possible to confirm that a connection destination has finished communication. Further, the network-constituent electronic device gives main communicator 3A and the three notebook personal computers PC1-PC3 prepared in this conference room are connected to each other by the access point 6, the main communicator 3A, when registering a connection device, delivers all at once identification information packets for identifying the network-constituent electronic devices including the notebook personal computers PC1-PC3.

Therefore, each of the notebook personal computers PC1-PC3 etc. displays identification information and selects the electronic devices including the main communicator 3A and the other notebook personal computers PCi. It is thus possible for each notebook personal computer PCi of the conference room "Room336" to automatically recognize the plurality of electronic devices connected to the network. Therefore, an attendee involved in network information processing can easily attend his intended conference etc. which is held in the conference room "Room336" and smoothly enter a predetermined information processing system.

### (3) Second example

In this second example, two network systems #1 and #2 are connected to each other by communication means 40 so that these network information processing systems may exchange user information with each other. In contrast to the first example, the sub-communicators 3C and 3D and the access point 6 are omitted in a system configuration (network information processing system related to the third aspect of the present invention).

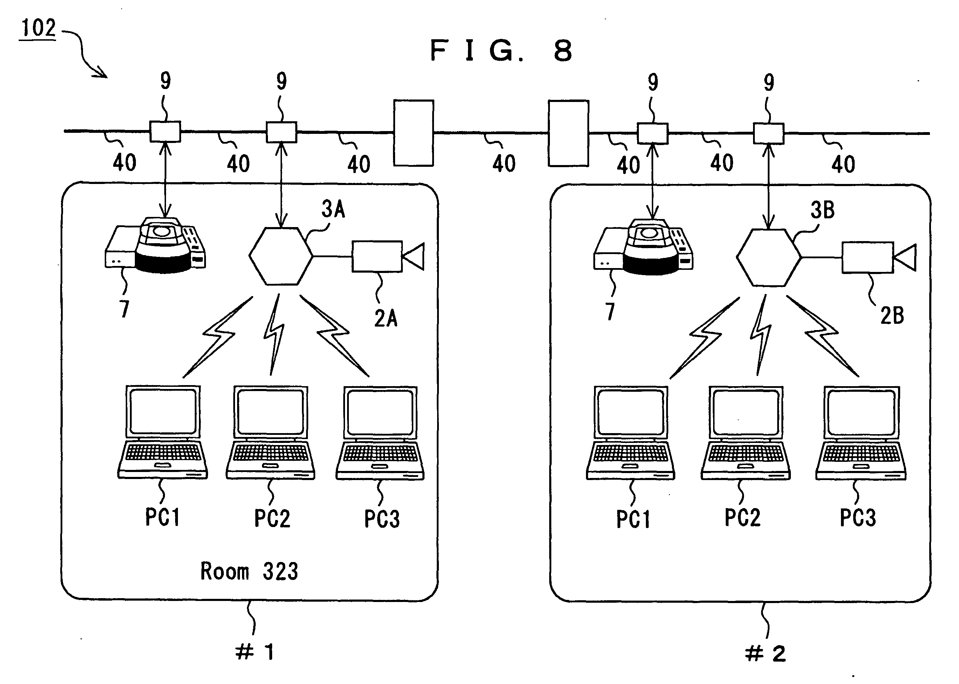

In a network-type electronic conferencing system 102 shown in FIG. 8, for example, the network system #1 is constituted of network-constituent electronic devices of a conference group of Room No. 323 and the network system #2 is constituted of network-constituent electronic devices of a conference group of Room No. 101, so that these two systems #1 and #2 are connected to a same network to process information.

In Room No. 323 (system #1), a communicator 3A and a TV conferencing apparatus 7 are each connected through a HUB9 to the communication means 40. To the communicator 3A, a projector 2A is connected. In the system #1, three notebook personal computers PCi (i=1-3) are prepared. In Room No. 101 (system #2), a communicator 3B and a TV conferencing apparatus 7 are each connected through a HUB9 to the communication means 40. To the communicator 3B, a projector 2B is connected. In the system #2 also, the three notebook personal computers PCi (i=1-3) are prepared. Note here that the same components as those of the first example, which are indicated by the same names or reference symbols, have the same functions so that the description thereof is omitted. Assume here a case where user information of the notebook personal computer PC1 belonging to Room No. 323 is transferred to the notebook personal computer PC2 belonging to Room No. 101 and displayed.

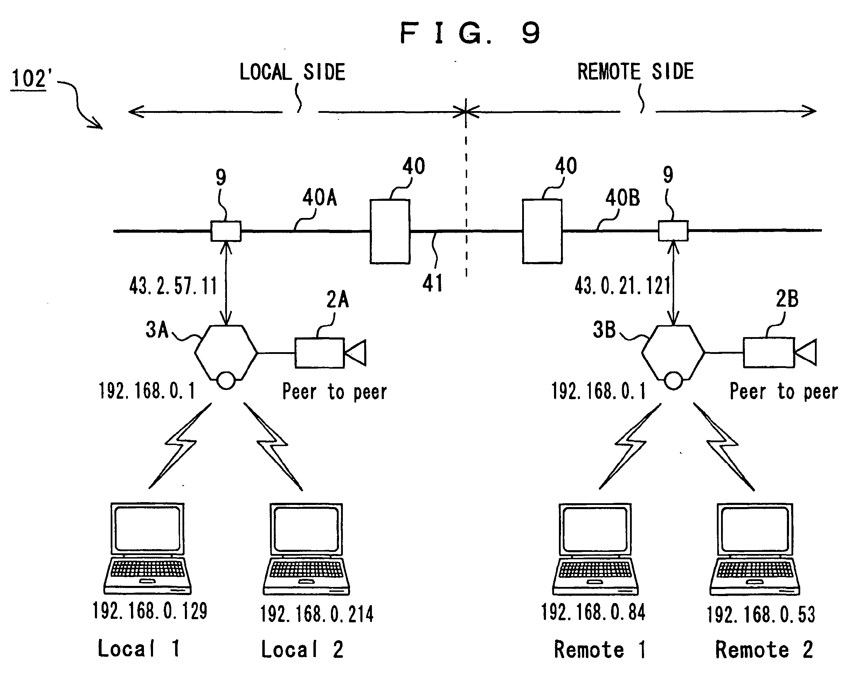

Such a case is assumed that, in an electronic conferencing system 102' shown in FIG. 9, a local-side attendee and a remote-side attendee communicate with each other directly between the communicator 3A having a global address (43.2.57.11) and the communicator 3B having a global address (43.0.21.121). In this case, access is placed from a network with a private IP (192.168.0.xxx) through a global network to a network with another private IP. Presently, a TCP/IP network has become widely used, so that, for the current IP version 4 using address values of 32 bits, it is impossible to assign a unique IP address to every node all over the world as in the case of a conventional system.

In this view, such a method may be conceivable that by utilizing a network address translation (NAT) function, a private IP address is assigned to each node in an organization so that file transfer or chatting may be performed by assigning an original IP address only when this organization accesses an external Ethernet. In this case, channeling from the local side to the remote side involves translation of a global IP into a private IP.

However, when the NAT function is utilized, only IP addresses of a transmission source and a transmission destination written at a packet header are identified, so that the private address and the global address always correspond to each other in a one-to-one relationship. Therefore, the number of nodes that can place access to an outside using one global address is limited to only one at a time.

To solve this problem, presently an IP masquerade is utilized such that by managing correspondence between local addresses and global addresses for each TCP/UDP communication port, when a different port is used in communication, a plurality of local nodes can perform communication simultaneously using one global address. However, this system involves complicated control.

Therefore, in this electronic conferencing system 102, in the paired network information processing systems, the communicators 3A and 3B are used respectively so that these systems may exchange user information with each other (information processing method related to the fourth aspect of the present invention). For example, in FIG. 8, it is defined that a conference group which one party attends is a local side and his or her connection-destination conference group is a remote side. The local side and the remote side are connected to each other by the communication means 40. In this configuration, presentation materials of the local side can be displayed to the projector 2B of the remote side. In this case, a file for the presentation materials goes along the following path.

The path goes through the local-side notebook personal computer PC1, the local-side communicator 3A, the remote-side communicator 3B, and the remote-side projector 2B in this order or the local-side notebook personal computer PC1, the local-side communicator 3A, and the local-side projector 2A in this order. Assume here that chatting or file transfer is performed between the attendees in a case where the local-side attendee uses a private IP. Suppose that the attendee in a local group communicates with the communicators 3A and 3B in, for example, a segment of "192.168.0.xxx".

The local-side communicator 3A manages information (names, IP addresses, etc.) of all the local-side conference attendees. Therefore, the attendees can communicate with each other (in the same segment) through a path that goes through the local PC1, the local-side communicator 3A, and the local-side notebook personal computer PCi (192.168.0.aaa), (192.168.0.mmm), or (192.168.0.bbb).

In this electronic conferencing system 102, the local-side communicator 3A manages the following information of the attendees as user information, that is, IP addresses of the notebook personal computer PCi of the attendees. That attendee information to be managed is as follows:

| <User name> | <IP address> |
|---|---|
| Local 1 | 192.168.0.101 |
| Local 2 | 192.168.0.102 |
| Local 3 | 192.168.0.103 |

Similarly, the remote-side communicator 3B manages the following information of the attendees as user information, that is, IP addresses of the notebook personal computer PCi of the attendees. That attendee information to be managed is as follows:

| <User name> | <IP address> |
|---|---|
| Remote 1 | 192.168.0.101 |
| Remote 2 | 192.168.0.102 |
| Remote 3 | 192.168.0.103 |

With this, when the local side and the remote side are connected to each other, the attendee information can be exchanged between the communicators 3A and 3B, thus transferring information etc. of remote-side operations to the local-side notebook personal computer PCi. For example, control is conducted so that the communicator 3A allows the user information of the notebook personal computer PC1 belonging to Room No. 323 to be displayed on the notebook personal computer PC2 belonging to Room No. 101. Specifically, the attendees belonging to Room No. 323 are displayed in a form of a user icon on the notebook personal computer PCi of the attendee belonging to Room No. 101 so that they may be confirmed.

It is thus possible to handle the user icon of the notebook personal computer PC2 (remote-side attendee) belonging to Room No. 101 as in the case of displaying the user icon on the notebook personal computer PC1 (local-side attendee) of Room No. 323 belonging to the same electronic conferencing system 102. Therefore, only by clicking the user icon to specify a communication partner, the icon can be operated without knowing about which one of the communicators 3A and 3B the attendee belongs to (which method is hereinafter referred to as an attendee information exchange system).

The following will describe an example of attendee information exchange in the network-type electronic conferencing system 102. In this description, the GUI-activation-time screen P0 shown in FIG. 6 is referenced.

The GUI-activation-time screen P0 shown in FIG. 6 provides contents to be displayed on the notebook personal computer PC1 etc. of an attendee belonging to a local-side conference group. On the right side in this GUI-activation-time screen P0, an attendee screen 23 is displayed, in which IP addresses, face images of attendees, etc. of the notebook personal computers PCi of the local-side conference group and the remote-side conference group that attend this electronic conferencing system 102 simultaneously are displayed. In this example, there are displayed Local 1 and its IP address (192.168.0.214) that indicate attendees of the local-side conference group, Remote 2 and its IP address (192.168.0.53) that indicate attendees of the remote-side conference group, and Remote 1 and its IP address (192.168.0.84) that indicate the other attendees.

In this system 102, attendee information is exchanged between the communicators 3A and 3B to enable, for example, the local-side communicator 3A to manage information of the attendees of both the local side and the remote side, so that a conference can be held without knowing about which one of the local and remote sides the attendee belongs to in particular. For convenience, a character [Remote] is displayed next to the icon of a local-side attendee for differentiation from a local-side one.

For example, in a case where a file is transferred from local-side Local1 to remote-side Remote2, packet transfer is processed as follows. In this example, the local-side notebook personal computer PC1 has an IP address of (192.168.0.101), a transmission source of Local1, and a transmission destination of Remote1. The remote-side notebook personal computer PC2 has an IP address of, for example, (192.168.0.53), a transmission source of Local1, and a transmission destination of Remote1. The local-side communicator 3A has a global address of (43.2.57.33). The remote-side communicator 3B has a global address of (43.0.21.121) (information processing method according to the fourth aspect of the present invention).

Based on this assumption, in a case where a local-side attendee (Local1) shown in FIG. 9 sends a packet of file information etc. to a remote-side attendee (Remote1), first the Local1 (local-side notebook personal computer PC1) transmits a packet describing information of a name of a remote-side transmission-destination user to the local-side communicator 3A. When having received this, the local-side communicator 3A creates a transfer header based on this information. The transfer header describes therein information of a transmission source and a transmission destination. Then, the packet attached with the transfer header is transmitted to the remote-side communicator 3B.

When having received this, the remote-side communicator 3B decrypts the transfer header, references an IP address of the transmission destination based on information of the remote-side attendee, and transfers file information etc. to Remote1 (remote-side notebook personal computer PCi) having this IP address. To send a packet from the remote side to the local side, on the other hand, reverse the order of these processes. To have a chat with a plurality of partners, perform the same processes except for the transmission destinations being more than one.

Such a series of file transfer operations are performed by dragging an icon of a file to be transferred to a user icon of a file transfer-destination partner and dropping there on a GUI-activation-time screen P2 shown in FIG. 6. Further, as for a chat, by clicking and selecting a user icon of a partner of the chat and clicking a "CHAT" button, a message of the chat is transmitted only to that partner. The operations for selecting these partners are implemented by the same processes without knowing about whether the transfer partner is on the local side or the remote side and so very easy for the user to perform.

In such a manner, in the electronic conferencing system 102 according to the second example related to the present invention, the communicators 3A and 3B exchange user information to each other between the network systems #1 and #2. Therefore, it is possible to directly transfer chats, files, etc. between the notebook personal computer PC1 (local-side attendee) in Room No. 323 and the notebook personal computer PC2 (remote-side attendee) belonging to Room No. 101. Besides, a user can implement communication processing between the local and remote sides by the same operations as those for communication between the local and local sides without being conscious of remote communication. Moreover, operations on a GUI screen of a client PC can be implemented by totally the same procedure as that for a case where a transfer destination is the local side and so are very easy for the user to perform.

According to an attendee information exchange method related to this electronic conferencing system 102, communication processing can be performed easily not only between the network system #1 and the network system #2 but also between notebook personal computers PCi that use private IPs in a local area. The attendee information exchange method is very effective.

### (4) Third example

In this third example, a network information processing system is applied to each of the remote-located conference rooms to constitute a remote electronic conferencing system 103 by utilizing a dedicated line or a public telephone line and/or a communication network between these remote locations so that information of registered devices that provides one example of connection information about network-constituent electronic devices may be exchanged between these network information processing systems (network information processing system related to the fifth aspect of the present invention).

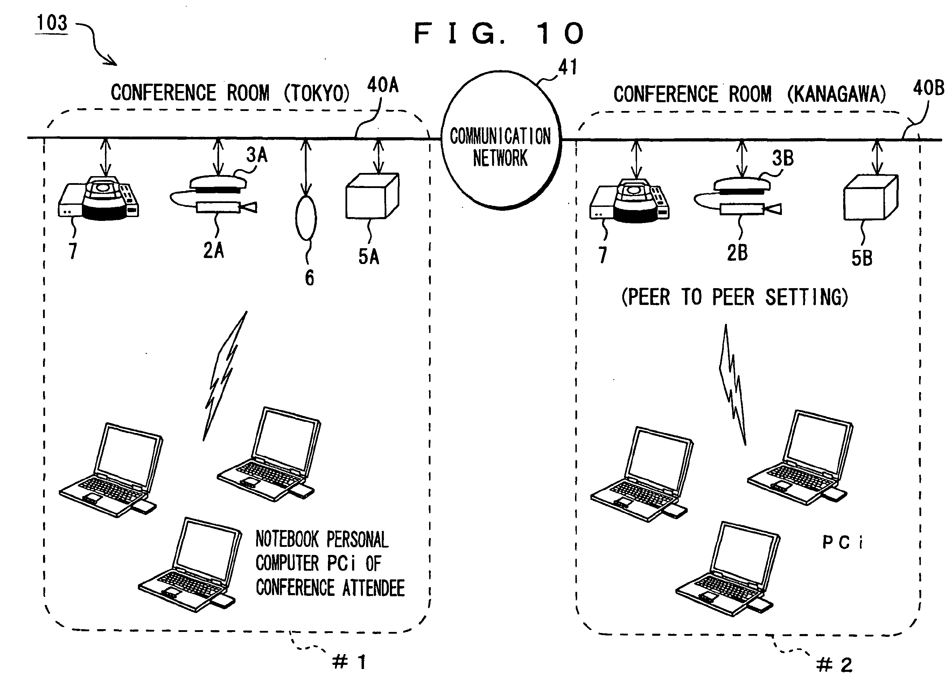

The remote electronic conferencing system 103 shown in FIG. 10 is such that, for example, a network information processing system is applied to remote locations such as a conference room in Tokyo and that in Kanagawa Prefecture. In the conference room in Tokyo (system #1), there are arranged a projector 2A, a communicator 3A, and an access point 6, in which system #1 the communicator 3A and a TV conferencing apparatus 7 are connected through a communication MODEM etc., not shown, to communication means 40A (external connection enabled). To the communicator 3A, the projector 2A is connected. In this conference room, three notebook personal computers PCi (i=1-3) are prepared which are each equipped with a wireless LAN function that enables communication through the access point 6.

In the conference room in Kanagawa (system #2), there are a projector 2B and a communicator 3B having the wireless LAN function, in which system #2 the communicator 3B and the TV conferencing apparatus 7 are connected through a communication MODEM etc., not shown, to communication means 40B. In this conference room, three notebook personal computers PCi (i=1-3) are prepared which are each equipped with the wireless LAN function. This example demonstrates a case where the communicator 3B has been set in a peer-to-peer mode for wireless LAN communication. In this example, by setting Internet connection sharing (ICS) to a wire LAN, information is communicated through the communicators 3A and 3B.

The conference room in Tokyo and that in Kanagawa Prefecture are connected to each other utilizing a dedicated line or a public telephone line and/or a communication network. The communicators 3A and 3B are each equipped with wire and/or wireless LAN adapters. Note here that the components in the third example indicated by the same names or reference symbols in the first and second examples have the same functions and the description thereof is omitted here.

According to this example, in the remote electronic conferencing system 103, the communicator 3A of the system #1 and the communicator 3B of the system #2 exchange connection information about network-constituent electronic devices with each other. For example, the communicators 3A and 3B share connection information about the electronic devices by virtue of bilateral communication between the systems #1 and #2, to provide the user with the connection information of the electronic devices. It is thus possible to obtain connection information about the electronic devices of any other network information processing systems or activate an automatic connection application utilizing this connection information.

In this system 103, the communicators 3A and 3B manage connection information about electronic devices belonging to the same network information processing system. It is thus possible to use any desired ones of the network-constituent electronic devices any time. In this configuration, the user at the notebook personal computer PCi utilizes its input operation function to specify an IP address (unique identification information) of a connection-destination electronic device. It is thus possible to notify a connection partner of use of the electronic device clearly.

In this system 103, the communicators 3A and 3B share user information obtained by bilateral communication between the network information processing systems to provide control so that user information of the notebook personal computer PCi belonging to one network information processing system may be displayed to the notebook personal computer PCi belonging to the other network information processing system. In such a manner, communication is possible with the user at a remote location (connection destination) in the same way as with a conference attendee.

In this system 103, device names and/or connection information of the network-constituent electronic devices are registered in the communicators 3A and 3B. By thus registering the information, it is possible for an attendee related to this electronic conferencing system 103 to easily expand electronic devices necessary for a network configuration.

In this system 103, an application for independent information exchange is installed in the communicators 3A and 3B so that an IP address of a connection destination may be received upon remote connection of the network information processing systems and, based on this IP address, the information (registered device information) of the names and/or the connection of the electronic devices may be obtained.

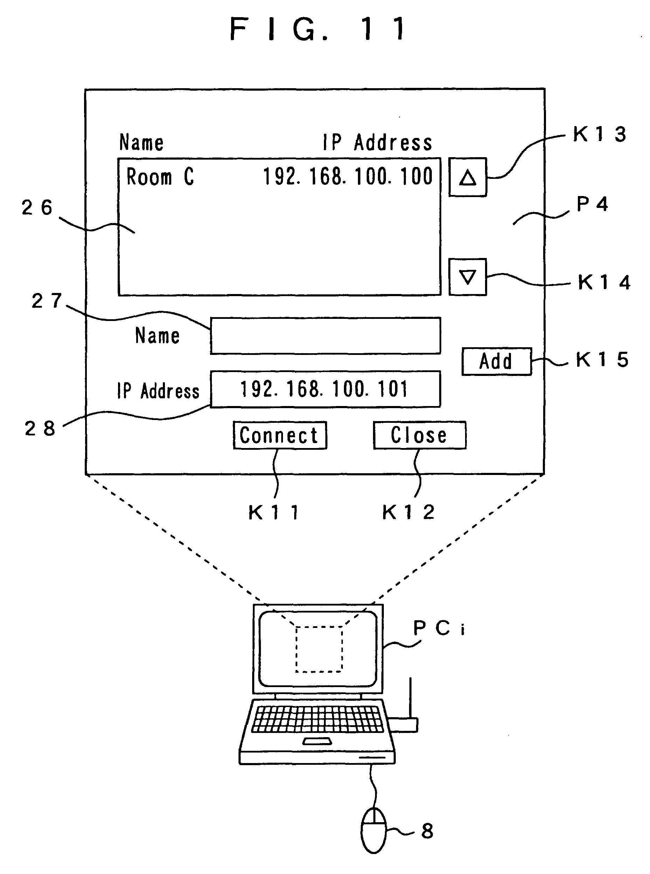

FIG. 11 is an image view for showing a display example of a GUI-connection confirmation screen P4. The GUI-connection confirmation screen P4 shown in FIG. 11 is an image for remote-connection operations, which is opened on a GUI-activation-time screen P0 at the notebook personal computer PCi. This GUI-connection confirmation screen P4 is provided with a connection-destination display area 26 for displaying names and IP addresses of connection destinations. In the connection-destination name "Name", for example, RoomC is displayed and, as its IP address, 192.168.100.100 is displayed. The contents of this display can be retrieved upward and downward using scroll keys K13 and K14.

Below the connection-destination display area 26, a connection-destination entry area 27 is provided for entering a name of a connection destination. Below the connection-destination entry area 27, an IP address entry area 28 is provided for entering an IP address of a connection destination. In this area 28, for example, an IP address of the connection-destination communicator 3B is entered. Then, a "Connect" button K11 provided below the IP address entry area 28 is clicked. Note here that by clicking a "Close" button K12, the GUI-connection confirmation screen P4 is closed. An "add" button K15 is used to retrieve the IP addresses.

The following will describe a process from building up of the remote electronic conferencing system 103 to implementation of communication by dividing this process into local/remote side user processing and communicator 3A processing. In this example, such a case is assumed that information is processed by connecting a plurality of network-constituent electronic devices to a same network. In this example, devices desired to be connected to the same network in teleconferencing have their device names and IDs (IP addresses or telephone numbers) necessary for connection registered beforehand on an environment setting screen when the main communicators 3A and 3B are set up.

The devices thus registered include sub-communicators 3C and 3D, a creator 5, the TV conferencing apparatus 7, etc. The sub-communicators 3C and 3D include an apparatus that does not manage information etc. of conference attendees. Connection information of the sub-communicators 3C and 3D and the creator 5 is all identified using an IP address. Connection information of the TV conferencing apparatus 7 is identified using an IP address, ISDN, telephone number, etc. By thus registering connected devices and their identification information upon connection beforehand, it is possible to share the information of the registered devices. This example is based on the assumption that the systems #1 and #2 shown in FIG. 10 exchange registered-device information (connection information) about the electronic devices with each other (information processing method related to the sixth aspect of the present invention).

### [Local-side user processing]

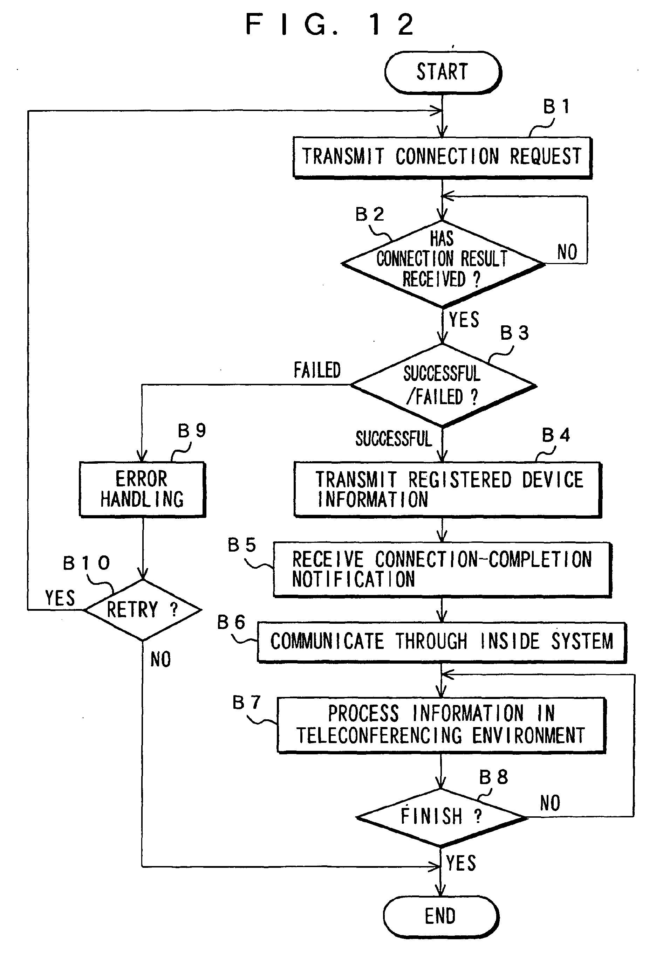

A local-side user first operates the notebook personal computer PCi to transmit a connection request at step B1 of a flowchart shown in FIG. 12. In this case, the user operates the GUI-activation-time screen P0 at the notebook personal computer PCi to display the GUI-connection confirmation screen P4 shown in FIG. 11. Then, he or she enters an IP address of the connection-destination communicator 3B in the "IP address" area 28 on the GUI-connection confirmation screen P4 and clicks the "Connect" button K11.

Then, at step B2, at the notebook personal computer PCi, the process waits until a connection result is received from the communicator 3A. Depending on the connection result sent from the communicator 3A, control branches off from step B3. In the case of successful connection, the process goes to step B4. In the case of failed line connection, the communicator 3A notifies the notebook personal computer PCi of the connection failure. When connection has failed, the process goes to step B9 to execute error handling. In error handling, for recognition of "connection failure", it is displayed at an LCD etc. on the notebook personal computer PCi so that the user can confirm it.

Then, at step B10, the process decides whether retry should be performed. A decision for retry is made by the user and, based on this decision, the notebook personal computer PCi operates. In the case of performing no retry, the process ends network information processing. In the case of successful line connection, the process goes to step B4, where the notebook personal computer PCi transmits the registered-device information to the communicator 3A. In this case, when having received the registered-device information, the main communicator 3A attaches an IP address of the main communicator 3A itself to this registered-device information and transmits them to the communicator 3B of the system #2.

In this case, a structure of this transmitted data is roughly as follows. It comprises data strings of the IP address of the main communicator 3A as well as information of the registered devices (i.e., devices 1, 2, ..., n) etc. The devices each have such a data structure that device x = (identification information 1, identification information 2, ..., identification information). For example, the TV conferencing apparatus 7 has a data structure of (IP address, ISDN, telephone number) etc.

After this registered-device information is transmitted, at step B5 the notebook personal computer PCi receives a notification of connection completion from the communicator 3A. Then, at step B6, the notebook personal computer PCi performs communication through an internal module of the system #1. It is done so in order to notify that the system #2 and the line have been connected.

For example, the internal module acquires information of a connection destination by any one of the following methods. Since registered-device information such as connection information is held in the communicator 3A etc., an application program interface (API) is called into the notebook personal computer PCi to acquire it. Attendees' information undergoes connection processing independently through a management module of the communicator 3A in the system #1 utilizing an IP address so that the respective information may be exchanged. Note here that some of the network-constituent electronic devices that require complicated processing or special information for their connection can be accommodated by independently connecting them and communicating information between them according to the similar method.

With this, a remote electronic conferencing environment is build up at step B7 and then, a mouse is used to process information using both the projectors 2A and 2B. Then, the process goes to step B8, where it is decided whether this remote electronic conference should be finished. Whether the conference should be finished is decided by the user. At this notebook personal computer PCi, when an ESC key is pressed, "the conference ends", to finish the network information processing.

### [Processing at communicator]

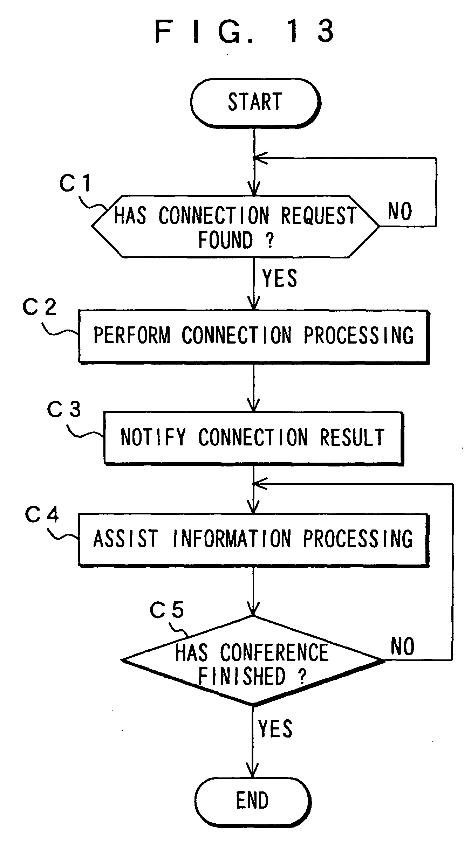

The communicator 3A waits until it receives a connection request from the notebook personal computer PCi at step C1 of a flowchart of FIG. 13. When a connection request is received, the process goes to step C2 to perform line connection processing. In this case, the line connection processing is started through TCP socket communication. When line connection has started, the communicator 3A performs connection to an IP address entered on the GUI-connection confirmation screen P4 utilizing TCP/socket communication. This IP address indicates the communication 3B of the system #2.

Then, the process goes to step C3 to transmit a notification of a connection result to the notebook personal computer PCi. Then, the process goes to step C4 to assist information processing at these systems #1 and #2. It assists file transfer, user information transmission, etc. At step C5, the process decides whether information processing assisting should be finished according to whether the conference has been finished. A notification of whether the conference has been finished is received from the notebook personal computer PCi of the user.

### [Remote side user processing]

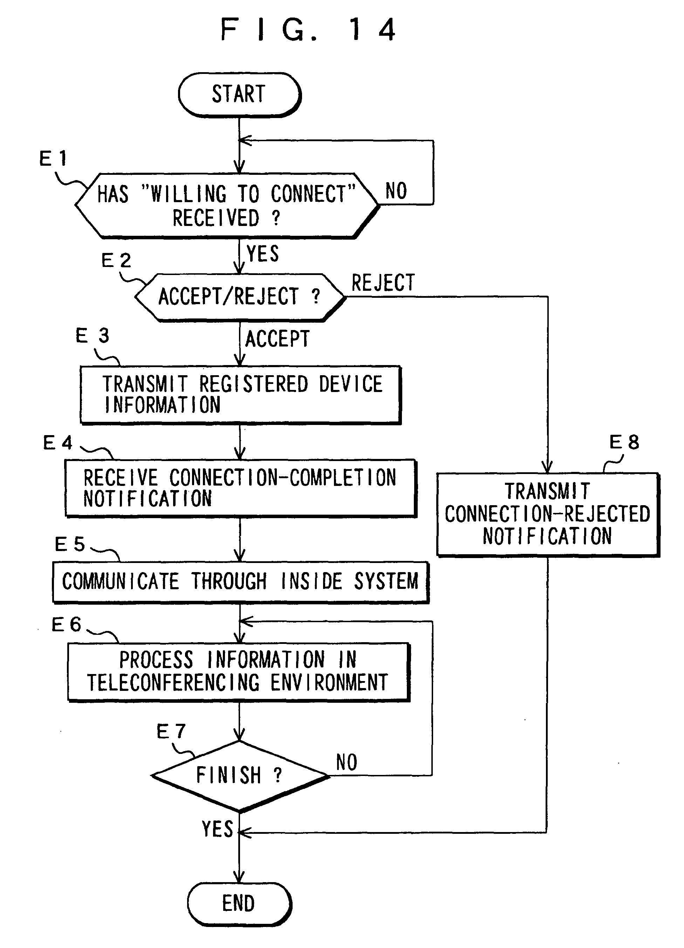

A remote-side user operates the notebook personal computer PCi to wait until it receives a connection request from the local side at step E1 of a flowchart shown in FIG. 14. When this connection request is received, the process goes to step E2 to decide whether this connection should be accepted or rejected. This is confirmation on whether the user of the system #1 wishes the connection. That is, when registered-device information is received from the system #1, it is necessary to notify the user of the system #1 of requesting for connection and confirmation of willingness for the connection.

This is done so for security to prevent leakage of conference information when an unintended conference is connected unconsciously. Whether the connection request should be accepted or rejected is decided by the remote-side user and, according to this decision, control branches off at the notebook personal computer PCi.

To accept this connection request, the process goes to step E3 to transmit the registered-device information through the communicator 3A of the system #1. The registered-device information is returned much the same way as contents of the registered-device information are transmitted by the communicator 3A. After the registered-device information is returned, the process goes to step E4, where the notebook personal computer PCi of the system #2 receives a connection-completion notification through the communicator 3B from the communicator 3A.

The process goes to step E5, where the notebook personal computer PCi performs communication using an internal module in the system #2. It is done so in order to notify that the system #1 and the line have been connected. With this, at step E6, a remote electronic conferencing environment is built up and then, the mouse is used to perform information processing by use of both of the projectors 2A and 2B etc.

Then, the process goes to step E7 to decide whether this remote electronic conference should be finished. Whether the conference should be finished is decided by the user. The user at this notebook personal computer PCi presses the ESC key to "finish the conference", to end the network information processing. Note here that if the connection request is rejected at step E3, the process goes to step E8 to transmit the notification that the connection request has been rejected. Then, the network information processing is finished.

In such a manner, according to the remote electronic conferencing system 103 related to the third aspect of the present invention, the communicators 3A and 3B exchange registered-device information about the network-constituent electronic devices between the systems #1 and #2. Therefore, it is possible to share the communicator 3B, the notebook personal computer PCi, the creator 5, and the TV conferencing apparatus 7 that belong to the plurality of systems #1 and #2 or contents of electronic information created by this creator 5 only by specifying an IP address of a connection destination without knowing about complicated settings in the network at all. Moreover, since the remote electronic conferencing system environment can be built up easily, it is possible to easily hold a conference etc. between remote locations. Further, the user needs to know only an IP address of the communicator 3B in a conference room of a connection destination in order to obtain all information of network conferencing devices installed in the connection-destination conference room.

### (5) Fourth example

In this fourth example, a network-accommodation type display is prepared. This display is constituted of a projector equipped with communicator functions. This example assumes a case where network systems are connected to each other by communication means, so that based on input operations by a notebook personal computer PCi, the network-accommodation type display conducts simultaneous display control. It is thus possible to display the same electronic information contents simultaneously on a plurality of displays by one input operation on the notebook personal computer PCi. It is also possible for users attending the relevant network systems #1 and #3 to view the same images simultaneously.

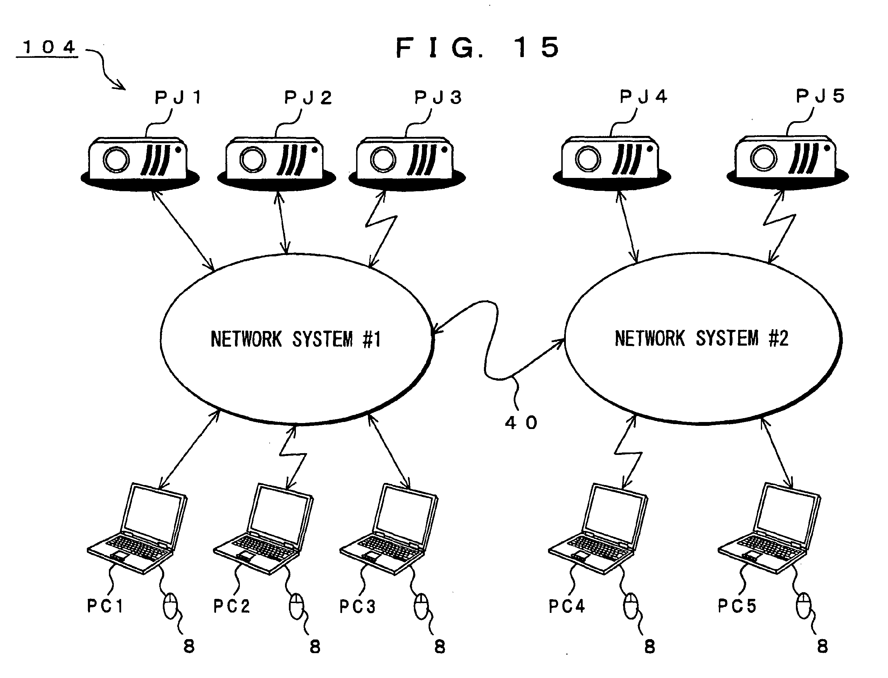

A multiple-network type electronic conferencing system 104 shown in FIG. 15 comprises two network systems #1 and #2 and communication means 40 for connecting these network systems #1 and #2 to each other, in which the network systems #1 and #2 include, for example, five notebook personal computers PCi (i=1-5) each having an input operation function to process arbitrary information and five network-accommodation displays PJj (j=1-5) for processing at least information transferred from the notebook personal computers PCi and providing electronic information contents including display information. The displays PJj and the notebook personal computers (terminal apparatuses) PCi for operations may be connected to the network no matter whether it is wire or wireless connection and the systems #1 and #2 may be placed at physically remote locations.

The display PJj is one example of information provision management means and conducts simultaneous display control based on the input operations by the notebook personal computer PCi. The display PJj has a projector function to display images based on information transferred from the notebook personal computer PCi and a communicator function to assist electronic information processing based on the input operations by the notebook personal computer PCi.

In this system 104, such a case is assumed that five displays PJ1-PJ5 are connected to the network systems #1 and #2 so that the displays PJj that is selected on the basis of input operations through the notebook personal computer PCi may be grouped. In this example, the display PJj accessed first by the notebook personal computer PCi works as a master to acquire main control. For example, the displays PJ1 that has acquired the main control conducts control such that the three displays PJ1-PJ3 including itself connected to the network system #1 may be grouped and the two displays PJ4 and PJ5 connected to the network system #2 may be grouped.

In this system 104, the display PJj first accessed by the notebook personal computer PCi, for example, the display PJ1 delivers the same display contents to the plurality of grouped displays PJj all at once. Accordingly, it is possible to display an image of the same electronic information contents simultaneously on the three displays PJ1-PJ3 and the two displays PJ4 and PJ5 that have been grouped respectively beforehand.

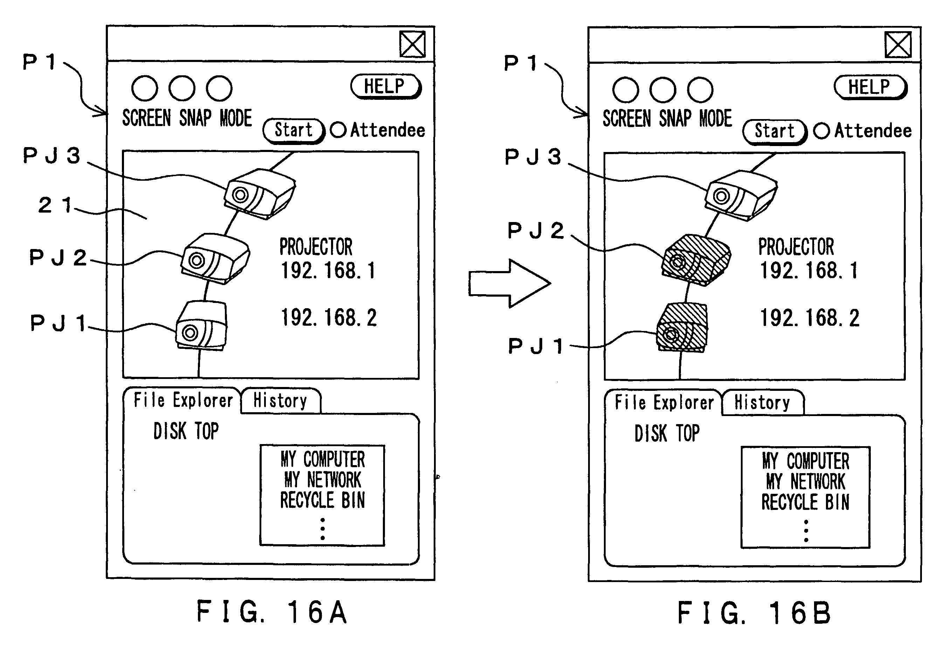

A control screen P1 shown in FIG. 16A is displayed on the left side of the GUI-activation-time screen P0 described with reference to FIG. 6. This control screen P1 is displayed on the basis of a predetermined application, so that in a device icon area 21 in this screen P1, icons of, for example, the three displays PJ1-PJ3 are displayed. That is, the notebook personal computer PCi automatically recognizes the displays PJ1-PJ3 connected to the same network and displays them on the control screen P1.

Contents thus displayed include the icon of the display PJj, a name or IP address for identifying this display PJj, etc. The user selects a display PJj on which he or she wishes to display presentation materials. To select the display PJj, he or she clicks the mouse at an icon that has an image of the display. When the display PJj is selected in such a manner, a color of its icon changes. The color changes in such a manner that outline icons of, for example, the displays PJ1 and PJ2 shown in FIG. 16A are changed into hatched icons of the displays PJ1 and PJ2 shown in FIG. 16B. This processing of selection is referred to as grouping of the network-constituent electronic devices, by which when a plurality of displays PJj is selected, the same contents can be displayed on all of the displays PJ1-PJ3 etc. by performing display operations on the icon of one of these displays.

The following will describe an example of selecting a display icon. In this example, such a case is assumed that five notebook personal computers PCi (i=1-5) and five displays PJj (j=1-5) are connected to the network systems #1 and #2 to process the information. The network systems #1 and #2 are connected to each other by the communication means 40. The display PJj provides simultaneous display control based on input operations by the notebook personal computer PCi. The notebook personal computer PCi detects the display PJj in the network and displays the icons of the displays on the control screen P1. This automatic detection function enables a display PJj available in the network to be identified.

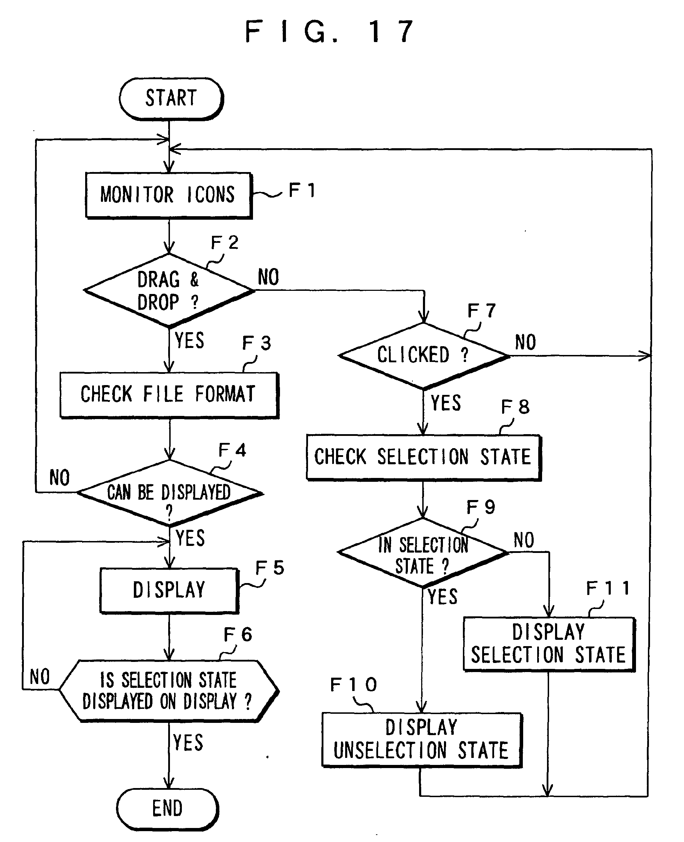

Under these processing conditions, at the notebook personal computer PCi, at step F1 of a flowchart shown in FIG. 17, mouse operations on the icons are monitored. When the user has operated the mouse to drag and drop materials for any icon (display) at step F2, the process goes to step F3 to decide whether these materials are given in a valid file format. In this case, a file is checked by identifying it by its file name extension.

Then, at step F4, control branches off in accordance with whether the file can be displayed or not. If the file is valid, the process goes to step F5 to provide the display related to the file on the displays PJ1, PJ2, etc. simultaneously. If the file format is invalid, the process returns to step F1 to monitor the icons. In this case, by checking selection state of the icons, an IP address of the display PJj is acquired to cause the notebook personal computer PCi to transmit a display instruction. At step F6, when display of the selection sate on the displays PJ1, PJ2, etc. is finished, display control is finished. If it is not finished yet, the process returns to step F5 to continue display processing. It is done so because there may be a case where display of that file is requested again.

Note here that in this example, at steps F7-F11, the network-constituent electronic devices are grouped. For example, when the icon (display) is clicked at step F7, the process checks a current selection state of the icon. For example, if the display icon is currently selected at step F8, the process goes to step F10 to put the icon in an unselection state.

If the icon is in the unselected state at step F9, the process goes to step F11 to put the icon in selection state. By doing so, it is possible to change the icon color of the display shown in FIG. 16A when the icon is put in the selected state. When a plurality of icons has been put in the selection state, it means that the displays PJ1, PJ2, etc. belonging to these selected icons have been grouped.

In such a manner, the network information processing system according to the fourth example related to the present invention assumes a case where the network systems #1 and #2 are connected to each other by the communication means 40, by which simultaneous display control is conducted by the display PJj that has acquired main control when accessed first through input operations by the notebook personal computer PCi. Therefore, by performing input operations in one occasion on the notebook personal computer PCi, the same electronic information contents can be displayed simultaneously on the plurality of displays PJj. It is thus possible for the users attending the network systems #1 and #2 to view the same image simultaneously.

### (6) Fifth example

In this fifth example, such a case is assumed that a directive pointer based on input operations through a mouse of a notebook personal computer PCi is shown on a projector 2A etc. in such a configuration that a transparent window W for suppressing operations of the directive pointer is displayed as an image in an LCD of the notebook personal computer PCi or an image projected by the projector 2A. In the following, the configuration example of the network-type electronic conferencing system 102 shown in FIG. 8 is referenced again.

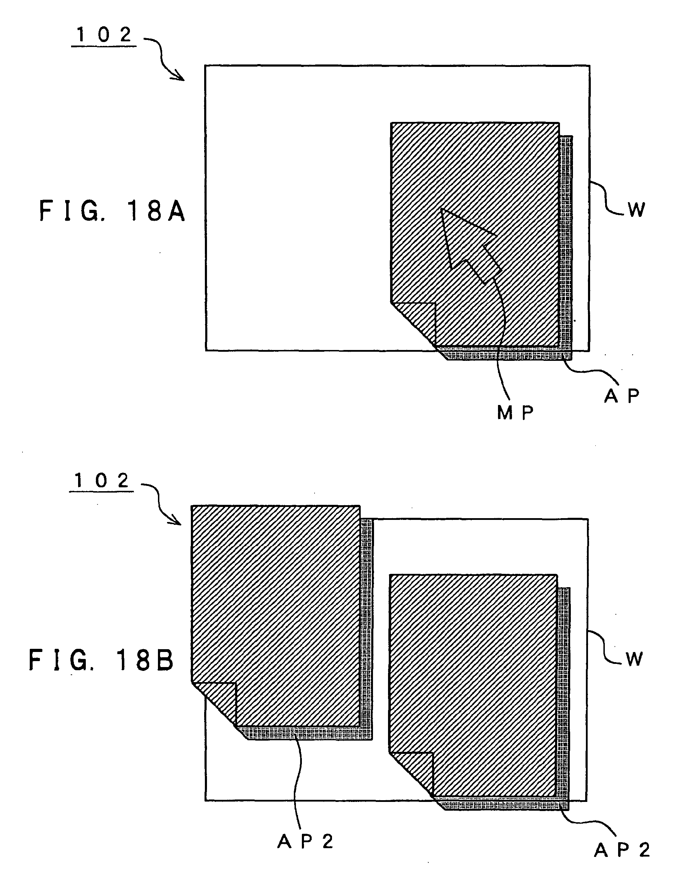

The transparent window W shown in FIG. 18A appears before file transfer is activated. It is applied to, for example, the electronic conferencing system 102 such as the one described with reference to FIG. 8. In this example, the transparent window W is displayed in a portion of an application (image) AP or in front of an entire screen where operations by use of a directive pointer Mp are desired to be suppressed.

The directive pointer (event of the mouse) Mp is captured (blocked) by the transparent window W and does not reach the application AP. With this, it is possible to suppress input operations by use of the directive pointer Mp exerted on an image displayed in the rear of the transparent window W.

In this system 102, while displaying the transparent window W, an application (image) AP1 is displayed in front of the transparent window shown in FIG. 18B. It is thus possible to perform input operations by use of the directive pointer Mp only of a specific application Ap1. Note here that since an application Ap2 shown in FIG. 18B is displayed in the rear of the transparent window W, as shown in FIG. 18A, input operations by use of the directive pointer Mp are suppressed from being exerted on an application (image) AP2.

Further, in this system 102, when an image that can be input by the directive pointer Mp is displayed at communicators 3A and 3B of the systems #1 and #2, the notebook personal computer PCi in one network system #1 transmits an information transfer request to the communicator 3A. The communicator 3A transmits an information-transfer-request acceptance notification to the communicator 3A of the other network system #2. Besides, the transparent window W is displayed at the communicators 3A and 3B of both of the network systems #1 and #2, so that the window W is erased when this notebook personal computer PCi has received an information-activation-completion notification from both of the communicators 3A and 3B.

The following will describe an example of control on the transparent window W in the electronic conferencing system 102 etc. In this example, in a conference room (system #1) of Room No. 323 (hereinafter abbreviated as Room323), a TV conferencing apparatus 7, three notebook personal computers PCi (i=1-3), and a communicator 3A connected to a projector 2A are prepared and, in a conference room (system #2) of Room No. 101 (hereinafter abbreviated as Room101) also, the TV conferencing apparatus 7, the three notebook personal computers PCi (i=1-3), and a communicator 3B connected to a projector 2B are prepared in such a configuration that Room323 and Room101 are connected to each other by communication means (network) 40.

In this example, such a case is assumed that a file on the notebook personal computer of a client in Room323 (hereinafter abbreviated as a client PCi) is displayed for presentation in both Room323 and room101. The communicators 3A and 3B are supposed to be of the same specifications.

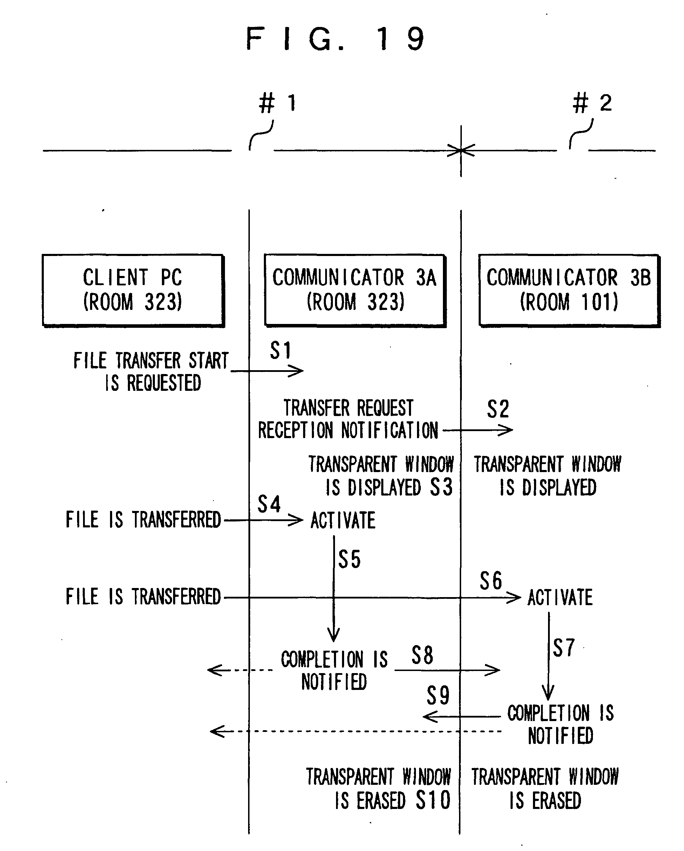

Under these processing conditions, at step S1 of a transition diagram shown in FIG. 19, a transfer start request for a file for use in presentation is transmitted from the client PCi to the communicator 3A in its own conference room (Room323). When having received this transfer start request, the communicator 3A transmits a notification indicating that it has received the transfer request to the communicator 3B in its partner's conference room (Room101), at step S2. In this case, at step S3, at each communicator 3A, the transparent window W is displayed in such a manner as to cover an LCD of the notebook personal computer PCi or the entire screen of the projectors 2A and 2B.

When these displays are finished, the process goes to step S4, where the client PCi starts file transfer. When the file transfer is completed, at step S5, the application AP is activated. In this case, it is activated in the rear of the transparent window W. It is thus possible to enter such a state that display of the application may be visible but the application AP cannot be operated by the mouse 8 until the transparent window W disappears (see FIG. 18A). As for the remote-side conference room also, at step S6, a file is transferred similarly and, at step S7, the application is activated.

When activation is completed for each of these rooms, they transmit an activation-completion notification to each other at steps S8 and S9, respectively and, when they each have received the notification, the process goes to step S10 to erase the transparent window W. Note here that if only one application is to be activated, such control can be conducted that the notifications at the time of steps S8 and S9 may be returned to the client side to disable mouse operations until these two notifications are received. However, by this method, it is impossible to suppress only mouse operations on the currently activated application AP2 until both sides complete activation in a condition where mouse operations are enabled on the application AP1 that has activated the communicator 3A etc.

According to a method using the above-mentioned transparent window W, on the other hand, as shown in FIG. 18B, by shifting a display position of the transparent window W to the rear of the application AP1 on which mouse operations are desired to be exerted, it is possible to suppress only the mouse operations on the application AP2 in which suppression of the mouse operations is desired. In the above example, after the application is activated, mouse operations in Room323 are transmitted to the communicator 3B in Room101 to permit the notebook personal computers PCi to operate the application simultaneously, thereby enabling display operations to be synchronized.

In the electronic conferencing system 102 related to the fifth aspect of the present invention, it is thus possible to suppress mouse input operations or the like on the newly activated application AP until it becomes ready in condition between remote locations without preventing mouse operations on a displayed screen, any other applications AP, etc. After the application is activated, by transmitting a command to it, it is possible to synchronize operations of both sides with each other without transferring files.

### (7) Sixth example

In this sixth example, by conducting remote control on synchronized display of a communicator 3A or 3B based on input operations by a notebook personal computer PCi, it is possible to display electronic information contents as synchronized between remote locations without knowing about complicated settings in a network at all and view electronic information contents shared by a plurality of network systems #1, #2, etc. simultaneously (network information processing system related to the seventh aspect of the present invention). In this example, although the creator 5, the TV conferencing apparatus 7, etc. provided in the remote electronic conferencing system 103 shown in FIG. 10 are omitted, of course these network-constituent electronic devices may be connected to each other to constitute a system 106. Note here that the same components as those of the third example that are indicated by the same names or reference symbols have the same functions and thus, the description thereof is omitted.

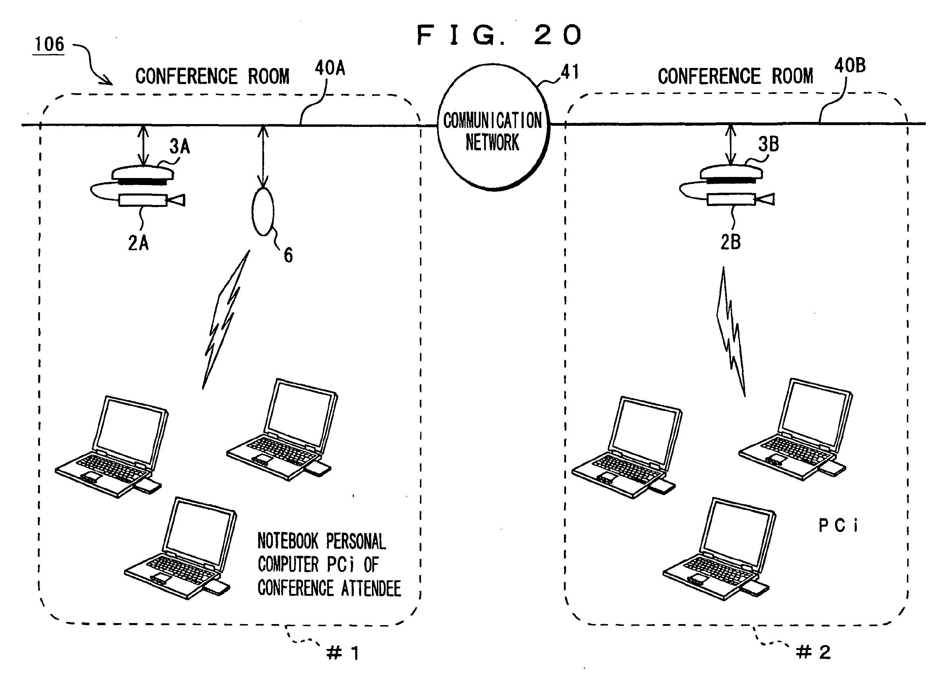

In a remote electronic conferencing system 106 shown in FIG. 20, remote control is conducted on synchronized display on the communicators 3A and 3B based on input operations by the notebook personal computer PCi of, for example, the system (conference room in Tokyo) #1. To the communicator 3A, a projector 2A is connected through RGB cables and, to the communicator 3B in the system (conference room in Kanagawa Prefecture) #2 also, a projector 2B is connected through RGB cables. Similar to the first through fifth examples, information is input to the communicator 3A from an application in the notebook personal computer PCi of a user via the network.

By this synchronized-display remote control, when a teleconference starts, control information indicating "to shut down information of all images displayed currently" or "to transfer new information to display electronic information contents" is output from the notebook personal computer PCi to the communicator 3A. By closing all the files displayed currently, it is possible to enhance secrecy of conference information (presentation information) on a local side.

Further, by transferring the files displayed currently to connection destinations to display them so as to be met in display order, conference contents on the local side can be utilized in a teleconference. For example, in a case where "files currently displayed are transferred to each other in a synchronized manner", a teleconference can be held on an extension of the local-side conference so that conference contents may be shared by the teleconference.

In this example, after devices are connected, a communicator 3A accessed first by the notebook personal computer PCi acquires main control. It is the main communicator 3A etc. Based on input operations by this notebook personal computer PCi, synchronized-display remote control is conducted. The input operation function of this notebook personal computer PCi is utilized to transfer control information to a connection-destination communicator 3B. It is done so in order to synchronize display screens in both systems #1 and #2.

In this example, the communicator 3A is equipped therein with an internal module for receiving a remote-connection completion notification. When having received the notification, this internal module closes all files of the projectors 2A, 2B, etc. or transfers the files and, when they are transferred completely, opens the files and meets the display order of opened files. An application having such a function may be given in the communicators 3A and 3B.

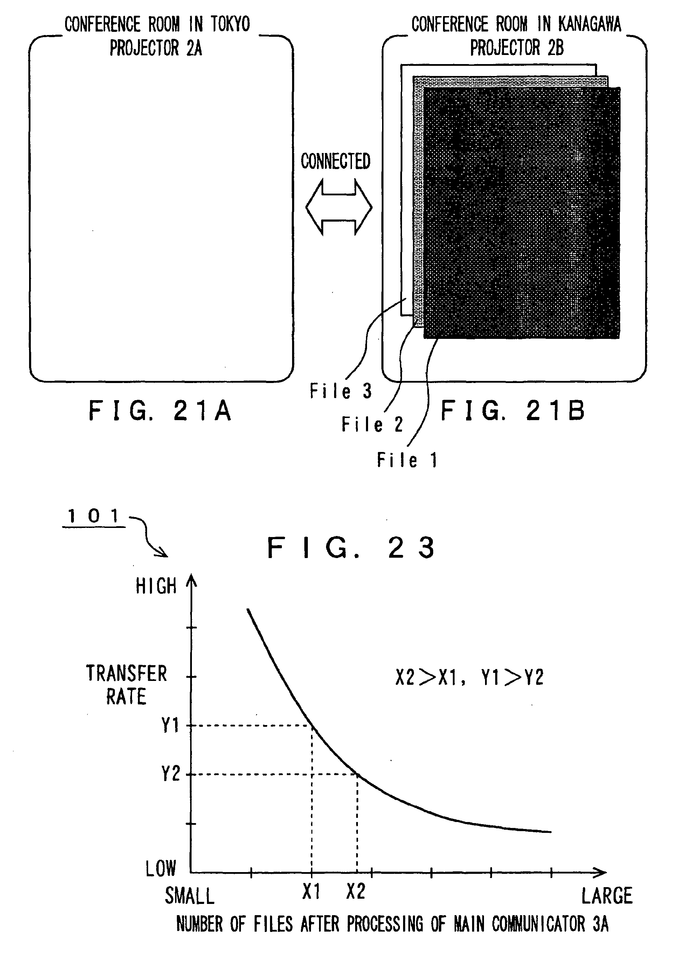

The following will describe an example of synchronized-display remote control in the remote electronic conferencing system 106. In the present example, since the communicator 3 has received no files, nothing is displayed on the projector 2A in the conference room (system #1) in Tokyo shown in FIG. 21A. On the projector 2B in the conference room (system #2) in Kanagawa Prefecture shown in FIG. 21B, on the other hand, presentation is already performed and the communicator 3B has received three files of Fil1, File2, and File3, so that these three files File1, File2, and File3 are displayed on the projector 2B.

In such a manner, different are the electronic information contents to be displayed on the projectors 2A and 2B through the communicators 3A and 3B in the respective conference rooms. In this example, all presentation files must be closed in the communicator 3B, but it has not such processing conditions that no file is present in the system #1.

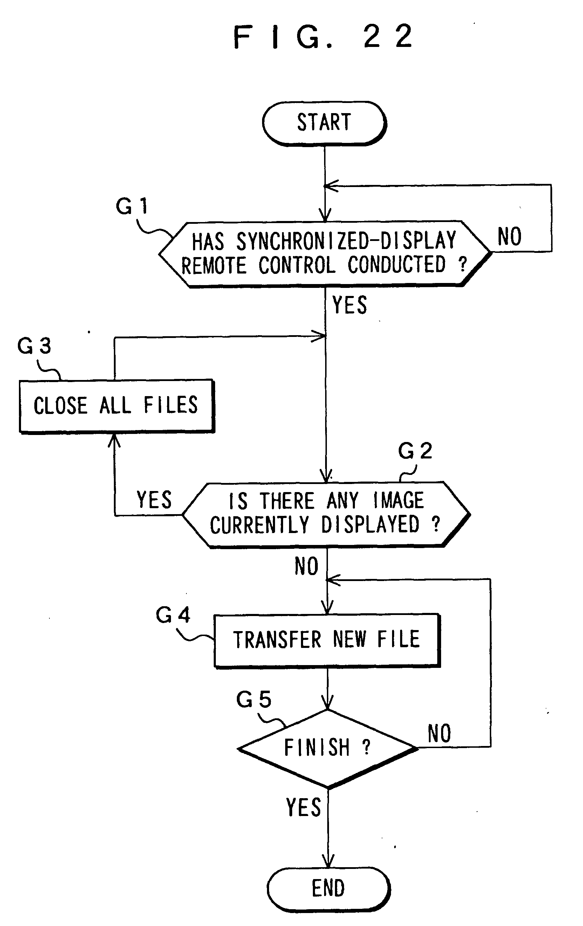

In such a situation, it is assumed that a request for connection from the conference room (system #2) in Kanagawa to the conference room (system #1) in Tokyo is displayed on a screen displayed by the communicator 3A and accepted by the conference room in Tokyo (information processing method related to the eighth aspect of the present invention). Under these processing conditions, the process waits for mouse operation information indicating whether synchronized-display remote control should be conducted on the projectors 2A, 2B, etc., at step G1 of a flowchart shown in FIG. 22. The mouse operation information is transmitted from the notebook personal computer PCi of the system #1 to the communicator 3A.

The communicator 3A receives the mouse operation information and conducts synchronized-display remote control. In this case, the process goes to step G2 to check whether there is any image displayed currently. If some image displayed currently is present, the process goes to step G3 to notify the communicator 3B of the system #2 of control information instructing "to close all files currently displayed". In this case, by closing all the files, that is, displaying a background of the communicator 3B on the projector 2B, they are synchronized inevitably. In an example of FIG. 21B, File1 through File3 displayed in the conference room of Kanagawa are closed. It is done so to prevent contents of a conference in the system #2 from being leaked to the conference room of the system #1 when a teleconference is started, that is, to keep security of conference information.

Then, the process returns to step G2 to check whether there is any image displayed currently. In this case, no image displayed currently is present, the process goes to step G4 to transfer a new file from the notebook personal computer PCi of the system #1 to the communicator 3A of the system #1 and the communicator 3B of the system #2. After a line is connected, the information exchange function described in the third example is applied so that files displayed on the projectors 2A and 2B may be transferred by the respective communicators 3A and 3B to each other and displayed.

With this, images related to the same presentation materials are displayed as synchronized with each other on the projector 2A connected to the communicator 3A and the projector 2B connected to the communicator 3B. In the examples of FIGS. 21A and 21B, File1 through File3 displayed in the system #2 are transferred to the conference room of the system #1 and displayed through the communicator 3A of this conference room on the projector 2A.

Further, it provides effective means where, in a conference of the system #2, the presentation etc. are prepared and discussed to perform a teleconference for the purpose of information sharing. However, if a file is large in capacity, it takes more time to transfer the file and so needs to be subject to operational devising such as data compression. Then, the process goes to step G5 to decide whether the teleconference should be finished. This decision is to be made by the user. When the teleconference is finished, network information processing is finished. If the teleconference is to be continued, the process returns to step G4 to transfer a next new file so that electronic information contents may be viewed simultaneously.

In such a manner, in the remote electronic conferencing system 106 related to the sixth example of the present invention, synchronized-display remote control is conducted on the communicators 3A and 3B of the systems #1 and #2 based on input operations by use of the notebook personal computer PCi of the system #1 etc. Therefore, it is possible to synchronize display contents between remote locations without knowing about complicated settings in the network at all. It is thus possible to view electronic information contents shared by a plurality of network information processing systems simultaneously.

### (8) Seventh example

In this seventh example, communication means 40 is used to connect a network system #1 comprised of, such as shown in FIG. 3, a notebook personal computer PCi (i=1-3), projectors 2A and 2C, main/sub-communicators 3A and 3C, a creator 5, and a TV conferencing apparatus 7 and a network system #2 comprised of the notebook personal computer PCi (i=1-2), projectors 2B and 2D, main/sub-communicators 3B and 3D, the creator 5, and the TV conferencing apparatus 7.

In this configuration, the main communicator 3A notifies processing status information to these notebook personal computers PCi and the notebook personal computers PCi controls an information transfer rate corresponding to the processing status information so as to keep high a response speed of an input interface such as a mouse in the notebook personal computer PCi in a case where the main communicators 3A and 3B etc. are remote-controlled and build up an electronic conferencing system 101 etc. having good operability. Here, the configuration diagram of the electronic conferencing system 101 related to the first example is referenced again.

In the electronic conferencing system 101 shown in FIG. 3, the main communicator 3A notifies the processing status information to the notebook personal computers PCi and these notebook personal computers PCi controls an information transfer rate corresponding to the processing status information. In this electronic conferencing system 101, the notebook personal computer PCi of a client in the system #1 transfers files to the other notebook personal computers PCi in the same conference room, thus realizing a file transfer function between the users. Further, the notebook personal computer PCi transfers files to the main communicator 3A. This system 101 performs the following processing.
① A file is displayed on the projector 2A connected to the main communicator 3A. Then, the main communicator 3A re-transfers the file also to the main communicator 3B in the other conference room, to display the same presentation materials on the projector 2B connected to the main communicator 3B.
② Then, the system #1 further re-transfers the files to the sub-communicator 3C, to display them on the projector 3C connected to the sub-communicator 3C. In this case, the main communicator 3A re-transfers the files also to the sub-communicator 3D in the other conference room, to display the same presentation materials on the projector 2D connected to the sub-communicator 3D. It is thus possible to view an image having the same electronic information contents in both of the conference rooms.
③ The files are re-transferred to the main communicator 3B in the other conference room, which main communicator 3B in turn transfers the files to a notebook personal computer PCi in the conference room, thereby realizing a file transfer function between the users over the conference rooms.

Further, the notebook personal computer PCi of the client in the system #1 sends information of a remote mouse (virtual mouse used to operate the main communicator 3A) to the main communicator 3A. In this example, communication is performed taking into account the following.
① A traffic of a local network in the conference room, that is, the local network involves use of a wireless LAN, so that a relevant bandwidth often becomes narrow.
② As for loads on the main communicator 3A, files are transferred via the main communicator 3A to the other conference room or the sub-communicator 3C, so that the loads are concentrated to the main communicator 3A. Therefore, as for the control of the information transfer rate in the notebook personal computers PCi handled in this electronic conferencing system 101, if the main communicator 3A processes a large quantity of information, an information transfer rate from the notebook personal computer PCi to this communicator 3A may be lowered and, if the main communicator 3A processes a small quantity of information, the transfer rate may be raised.

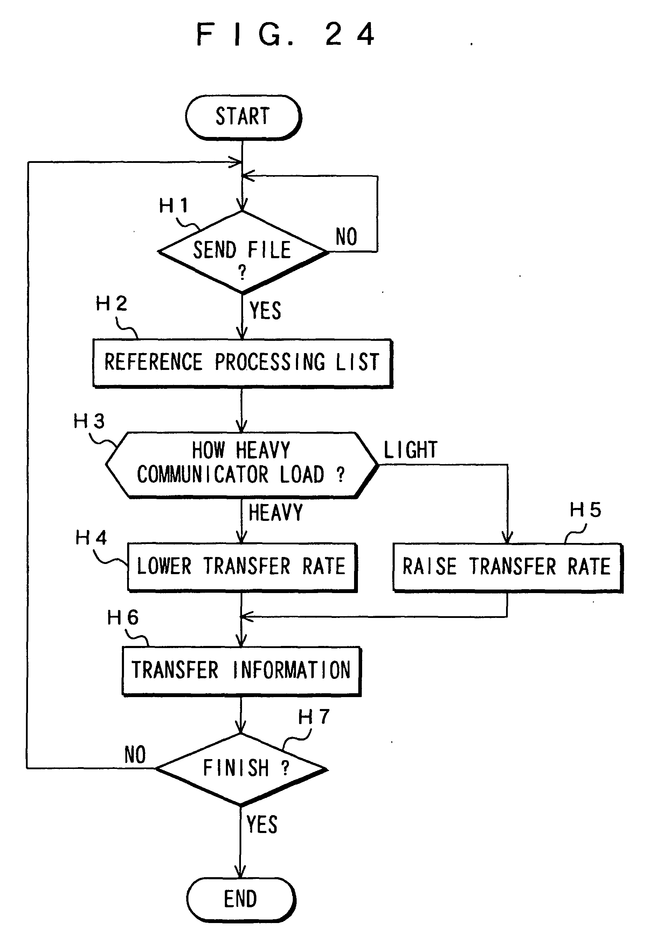

In FIG. 23, a vertical axis represents a transfer rate and a horizontal axis represents the number of files relating to information processing at the main communicator 3A. For example, second-order curve characteristics having a rightward inclination shown in FIG. 23 give transfer rate properties. This transfer rate is determined by a function value of the second-order curve. The number of files processed by the main communicator 3A is written in a processing list.

The main communicator 3A delivers processing status information about information processing it is performing itself currently for all of the notebook personal computers PCi in the system (same conference group) #1 (all-at-once delivery). It is done so in order to adjust at the notebook personal computer PCi a rate of transferring information to this communicator 3A. Note here that the processing status information indicates processing it is performing itself that has such contents as "how many files are being received currently" or "how many files are being transmitted currently".

In this system 101, the communicator 3A transmits processing status information to the notebook personal computers PCi each time the information processing status is changed (a new request is received/transmission or reception is completed). The present example assumes a case where the number of files processed by this main communicator 3A is written in a processing list, so that when transmitting information to the main communicator 3A, the notebook personal computer PCi references the processing list transferred from the main communicator 3A, to decide a transfer rate that corresponds to the number of files written in this processing list.

In this example, when remote-control input operations (remote mouse operations) are performed at the notebook personal computer PCi, a transfer rate of information to be transferred to the main communicator 3A is lowered by a constant value. For example, when this notebook personal computer PCi is transferring files to the main communicator 3A, the transfer rate is lowered a little. It is thus possible to preserve a bandwidth for remote mouse control.

At the main communicator 3A, control is conducted on the network bandwidth used for an application for each purpose. It is thus possible to preserve a portion of bandwidth relating to the user interface. By this operation, response of the remote input operations can be assured, thus preserving response performance of a user interface block. Note here that when no information is being transferred to the main communicator 3A, the above-mentioned information transfer rate control is not conducted. In this example, files are sent from the notebook personal computer PCi to the main communicator 3A one by one. If having received a request for transfer of at least two files, the communicator 3A suspends transfer of the second file and the subsequent.

The following will describe an example of data transfer in the electronic conferencing system 101. In this example, the communication means 40 is used to connect the network system #1 comprised of, such as shown in FIG. 3, the notebook personal computer PCi (i=1-3), the projectors 2A and 2C, the main/sub-communicators 3A and 3C, the creator 5, and the TV conferencing apparatus 7 and the network system #2 comprised of the notebook personal computer PCi (i=1-2), the projectors 2B and 2D, the main/sub-communicators 3B and 3D, the creator 5, and the TV conferencing apparatus 7. In this configuration, such a case is assumed that the main communicator 3A notifies processing status information to the notebook personal computers PCi and, at these notebook personal computers PCi, an information transfer rate is controlled so as to accommodate the processing status information.

Under these processing conditions, the notebook personal computer PCi of the client waits for a file transfer request at step H1 of a flowchart shown in FIG. 24. The file transfer request is entered by the user into this notebook personal computer PCi. The main communicator 3A simultaneously delivers such information as "how many files are being received currently" or "how many files are being transmitted currently" about current processing of its own to all the notebook personal computers PCi in the conference room of the same group as itself. This information is transmitted to all the notebook personal computers PCi each time a new request is received or transmission or reception is completed.

Therefore, to transfer a file, the process goes to step H2, where the notebook personal computer PCi references a processing list sent from the main communicator 3A. Then, the process goes to step H3, where the notebook personal computer PCi searches the processing list for the number of files processed by the main communicator 3A. By this search, a load of the main communicator 3A is checked. If the load of the main communicator 3A is heavy (the number of processing files is large), the process goes to step H4, where the transfer rate is reduced (lowered). The transfer rate is set, by referencing the second-order characteristics shown in FIG. 23, to Y1 if the number of files processed by the main communicator 3A is, for example, X1. If the number of files is X2, the transfer rate is set to Y2. In this case, however, X2>X1 and Y1>Y2.

For example, where the notebook personal computer PCi operates remote mouse when a file is being transmitted to the main communicator 3A, it lowers the rate of file transfer conducted by itself by a constant value to preserve a bandwidth for the purpose of remote mouse control. By this operation, response of the remote mouse is assured. Response performance of the user interface block is thus secured. Further, if the load on the main communicator 3A is light (the number of files is small), the process goes to step H5 to increase (raise) the transfer rate. With this, the process goes to step H6, where the files are transferred at a transfer rate thus adjusted.

In such a manner, in the electronic conferencing system 101 according to the seventh example of the present invention, the communication means 40 is used to connect the network system #1 comprised of the notebook personal computers PC1-PC3, the projectors 2A and 2C, the main/sub-communicators 3A and 3C, the creator 5, and the TV conferencing apparatus 7 and the network system #2 comprised of the notebook personal computers PC1-PC2, the projectors 2B and 2D, the main/sub-communicators 3B and 3D, the creator 5, and the TV conferencing apparatus 7, in which the main communicator 3A notifies processing status information to the notebook personal computers PCi and these notebook personal computers Pci control an information transfer rate corresponding to the processing status information.

Therefore, it is possible to keep high a response speed of an input interface such as the mouse in the notebook personal computer PCi in the case of remote-controlling the main communicator 3A of the system #1, thus performing communication in an appropriate band. It is thus possible to assure response in interactive work and build up the electronic conferencing system 101 having good operability. Moreover, a quantity of information transferred (traffic) in the network system #1 can be controlled, thus smoothly operating this system 101.

Although the present example has been described with reference to a case where two conference rooms are used, the present invention is not limited to it. There are no limitations in particular on the number of conference rooms to be set up, remote locations, neighbors, etc. Although such a case has been described that the main communicator 3A is linked to the notebook personal computer PCi in the conference room using a local wireless network, the present invention is not limited to it; for example, the system may use an access point. The communication means 40 may be connected to any other devices or the other conference room using a network available such as an intranet other than the electronic conferencing system. Besides the above, according to the seventh example, the main communicator 3A and the notebook personal computer PCi can communicate to each other using an appropriate band, thus improving a throughput about the main communicator 3A and an availability of the electronic conferencing system as viewed from the user.

Further, such module communication as to affect the operability of the mouse has been taken into account to the fullest. It is possible to inflict transfer rate limitations on communication of such a module that file transfer by the user has a relatively large margin in time for transfer, while, for example, limiting the bandwidth when the traffic is congested depending on the use condition of a network of the other modules, thus avoiding extra loads on proceeding of the electronic conference or the user operations.

### (9) Eighth example

In this eighth example, communicators and projectors are combined to constitute a network-accommodation type display system as shown in FIG. 15 in such a manner that based on mouse operations at a notebook personal computer PC1 etc. carried to a specific region or location such as a conference room or a classroom, display contents on projectors PJ11, PJ12, ... in one network system #1 may be conveyed to projectors PJ21, PJ22, ... in the other network system as in a "mirror". Besides, this example permits a presenter related to an electronic conferencing system 108 to present materials etc. smoothly and easily without knowing about that attendees on a remote location side are scattered about.

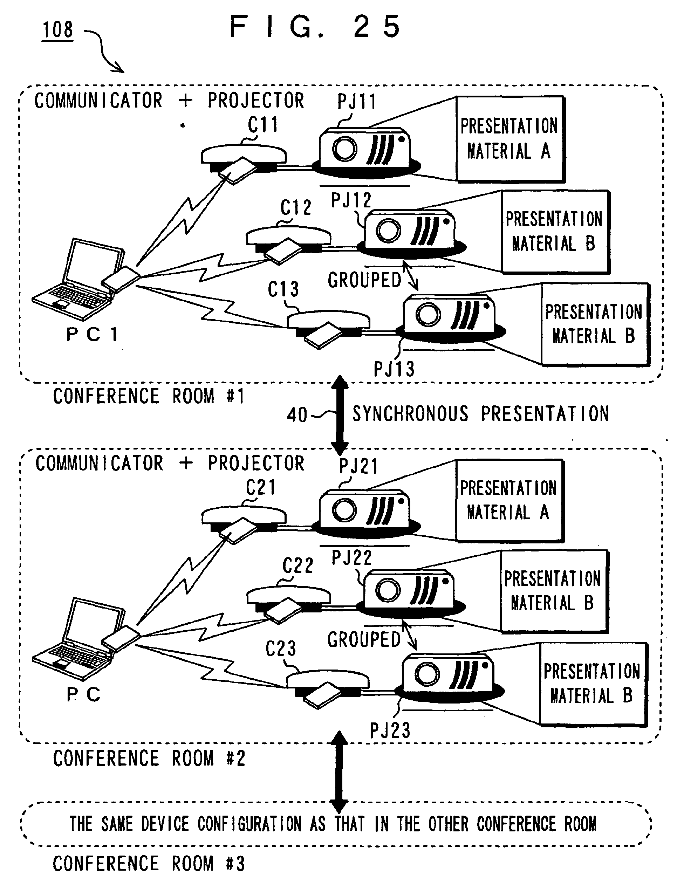

In the electronic conferencing system 108 shown in FIG. 25, as one example of a plurality of network information processing systems, the network information processing systems #1 (hereinafter abbreviated as conference room or system) and the network conferencing system #2 (hereinafter abbreviated as conference room or system) are built up and connected to each other using communication means 40. In this example, in each of the conference rooms #1 and #2, the same number of network-constituent electronic devices is prepared.

In the conference room #1, there are prepared one notebook personal computer PC1, three communicators C11-C13, and three projectors PJ11-PJ13. The communicators C11-C13 process information transferred from the notebook personal computer PCi and provide electronic information contents including display information. The projector PJ11 is connected to the communicator C11, to display a presentation material A. The projector PJ12 is connected to the communicator C12, to display a presentation material B. The projector PJ13 is connected to the communicator C13 and grouped with the projector PJ12, to display the presentation material B sent from the communicator C12. The projectors PJ12, PJ13, etc. are grouped as described with reference to FIG. 16.

In the conference room #2 also, there are prepared one notebook personal computer PC2, three communicators C21-C23, and three projectors PJ21-PJ23. The communicators C21-C23 process information transferred from the notebook personal computer PC2 and provide electronic information contents including display information. The projector PJ21 is connected to the communicator C21, to display the presentation material A. The projector PJ22 is connected to the communicator C22, to display the presentation material B. The projector PJ23 is connected to the communicator C23 and grouped with the projector PJ22, to display the presentation material B sent from the communicator C23.

To the communication means (network) 40 connecting the systems #1 and #2 to each other in this system 108, a wire or wireless system is applied. Further, in each of the systems #1 and #2, wire- or wireless-system communication means is applied also to the notebook personal computer PC1 etc. and to the three communicators C11-C13. As the above-mentioned communication means, a wireless LAN card is used. It is thus possible to build up the network-type electronic conferencing system 108.

In this system 108, at least in each of the network systems #1 and #2, the same number of devices including the three communicators C11-C13 and the three communicators C21-C23 is installed. By thus arranging the same numbers of communicators in the respective systems, it is possible to easily display presentation materials as synchronized on the projectors PJ11-PJ13 and the projectors PJ21-PJ23.

In this system 108, from, for example, the main communicator C11 of one network system #1, image information having the same contents is simultaneously delivered to the communicators C12-C13 and the communicators C21-C23 of both of the network systems #1 and #2 respectively. It is thus possible not only to facilitate mouse input operations by the users attending the conference room #1 but also to synchronize display contents of both the conference rooms, thus smoothly advancing network information processing such as conferences. For example, it is possible to synchronize presentation contents on the projector PJ11 in one conference room #1 so that the same contents may be given in all of the conference rooms. It is thus possible to give a sense of unity to the attendees related to the network information processing systems scattered around.

The following will describe an example of processing in the electronic conferencing system 108. In this example, in the conference room #1 at each of remote locations there are arranged and prepared the one notebook personal computer PC1, the three communicators C11-C13, and the three projectors PJ11-PJ13 and, in the conference room #2 there are arranged and prepared the one notebook personal computer PC2, the three communicators C21-C23, and the three projectors PJ21-PJ23, in such a configuration that these conference rooms #1 and #2 are connected to each other using the communication means 40.

Based on this, such a case is assumed that, for example, the presentation material A is displayed on the projector PJ11 and the presentation material B is displayed on the remaining two projectors PJ12-PJ13 in the conference room #1. Moreover, the presentation material A is displayed on the projector PJ21 and the presentation material B is displayed on the remaining two projectors PJ22-PJ23 in the conference room #2. Of course, power is already applied to the network-constituent electronic devices of the conference rooms #1 and #2.

Under these display conditions, first a dedicated application soft is used to activate the notebook personal computers PC1 and PC2 of the client. Then, the projectors PJ12-PJ13 of the system #1 are grouped. Such grouping as described with reference to FIG. 16 is performed. The projectors PJ22-PJ23 of the system #2 are also grouped. In this example, the three communicators C11-C13 and the three communicators C21-C23 in the respective conference rooms #1 and #2 are classified into two groups. The conference room #1 has two groups of the communicator C11 and the communicators C12-C13. The conference room #2 has two groups of the communicator C21 and the communicators C22-C23.

In this configuration, the presentation materials A and B are transferred from, for example, the notebook personal computer PC1 to the main communicator C11. The main communicator C11 transfers the presentation material B to the communicators C12 and C13. On the other hand, the presentation materials A and B are transferred to the main communicator C21 of the system #2. The main communicator C21 preserves the presentation material A and transfers the presentation material B to the communicators C22 and C23. Then, in the system #1, the presentation material projected by the projector PJ11 is controlled from the notebook personal computer PC1.

The two presentation materials A and B are displayed in the systems #1 and #2 simultaneously in such a manner that an image of the presentation material A may be displayed on the projector PJ11 in the system #1 and the image of the presentation material A may be displayed on the projector PJ21 of the system #2 simultaneously as if it is reflected in a mirror. Further, also on the projectors PJ12 and PJ13 grouped beforehand, an image of the presentation material B can be displayed. Moreover, the image of the presentation material B displayed on the projectors PJ12 and PJ13 of the system #1 is displayed on the projectors PJ22 and PJ23 of the system #2 simultaneously as if it is reflected in a mirror. That is, the main communicators C11 and C21 scattered around at remote locations conduct synchronized display control (synchronized-display remote control).

In such a manner, in the electronic conferencing system 108 related to the eighth example of the present invention, since remote display control etc. can be conducted so that based on mouse input operations from the notebook personal computers PC1 carried into the conference rooms #1 and #2, screen contents on the projectors PJ11-PJ13 in the conference room #1 may be displayed on the projectors PJ21-PJ23 in the conference room #2 as in a "mirror", an attendee (presenter) of the network electronic conferencing system 108 can make show-and-tell (presentation) without feeling that the other attendees are scattered around at remote locations.

Although this example has been described with reference to a case where the different presentation materials A and B are transferred to the three communicators C11-C13 in the conference room #1, the present invention is not limited to it; for example, the presentation materials may be the same electronic information contents. Further, although the main communicators C11-C13, the notebook personal computer PC1, etc. in the conference rooms #1 and #2 have been described with reference to a case where they are connected over a wireless network, the present invention is not limited to it; for example, they may be connected by a wire system.

### INDUSTRIAL APPLICABILITY

The present invention is extremely well applicable to a network electronic conferencing system, a network education system, a network game system, etc.

## Claims

1. A network information processing system in which a plurality of network-constituent electronic devices is connected to a same network, comprising:
at least one information processor for processing arbitrary information;
information provision management means for processing at least information transferred from said information processor and providing electronic information contents including display information; and
communication means for connecting said information provision management means to each of said information processors,
wherein, to process network information, said information provision management means delivers all at once identification information packets for identifying said network-constituent electronic devices; and
wherein said information processor displays identification information and selects electronic devices including said information provision management means and the other information processor.

2. The network information processing system according to claim 1, wherein information is processed by connecting to each other:
a first network information processing system in which a network is constituted of said plurality of electronic devices; and
a second network information processing system in which a network is constituted of the other plurality of electronic devices.

3. The network information processing system according to claim 1, wherein said information provision management means delivers group identification information to said information processors all at once every network information processing system; and
wherein said information processor lists and displays the group identification information and selects electronic devices including said information provision management means and the other information processors that belong to said first and second network information processing systems.

4. The network information processing system according to claim 1, wherein said information provision management means includes:
a display for displaying an image based on information transferred from said information processor; and
an information processing assisting apparatus for assisting electronic information processing, said information processing including said display, based on an input operation instruction from said information processor.

5. The network information processing system according to claim 4, wherein said information processing assisting apparatus is present in a range that can be accessed first from said information processor and plays a central role in network information processing.

6. The network information processing system according to claim 3, wherein said group identification information is registered in said information processing assisting apparatus for each of said network information processing systems.

7. The network information processing system according to claim 4, wherein in selection of network-constituent electronic devices other than said information processing assisting apparatus, all of electronic devices whose group identification information is selected on said information processor are displayed.

8. The network information processing system according to claim 1, wherein in a case where group identification information can be set to said network-constituent electronic devices, when having recognized the identification information packets delivered from said information provision management means all at once, each of said electronic devices checks whether they agree with said group identification information set to said electronic devices;
wherein, only when they agree with said group identification information, each of said electronic devices notifies said information processing assisting apparatus of presence and electronic device information of itself; and
wherein said information processing assisting apparatus registers the group identification information of said electronic devices.

9. An information processing method for connecting a plurality of network-constituent electronic devices to a same network and processing information, said method comprising the steps of:
connecting at least one information processor for processing arbitrary information and information provision management means for processing at least information transferred from said information processor and providing electronic information contents including display information by communication means; and
to process network information using said information provision management means, delivering all at once identification information packets for identifying said network-constituent electronic devices, wherein said information processor displays identification information and selects electronic devices including said information provision management means and the other information processor.

10. The information processing method according to claim 9, wherein information is processed by connecting to each other:
a first network information processing system in which a network is constituted of said plurality of electronic devices; and
a second network information processing system in which a network is constituted of the other plurality of electronic devices.

11. The information processing method according to claim 10, wherein group identification information is delivered from said information provision management means to said information processors all at once every network information processing system; and
wherein said information processor lists and displays the group identification information and selects electronic devices including said information provision management means and the other information processors that belong to said first and second network information processing systems.

12. The information processing method according to claim 9, wherein said information provision management means uses:
a display for displaying an image based on the information transferred from said information processor; and
an information processing assisting apparatus for assisting electronic information processing, said information processing including said display, based on an input operation instruction from said information processor.

13. The information processing method according to claim 12, wherein said information processing assisting apparatus is present in a range that can be accessed first from said information processor and plays a central role in network information processing.

14. The information processing method according to claim 12, wherein in selection of network-constituent electronic devices other than said information processing assisting apparatus, all of electronic devices whose group identification information is selected on said information processor are displayed.

15. The information processing method according to claim 9, wherein in a case where group identification information can be set to said network-constituent electronic devices, when having recognized the identification information packets delivered from said information provision management means all at once, each of said electronic devices checks whether they agree with said group identification information set to said electronic devices;
wherein, only when they agree with said group identification information, each of said electronic devices notifies said information processing assisting apparatus of presence and electronic device information of itself; and
wherein said information processing assisting apparatus registers group identification information of said electronic devices.

16. The information processing method according to claim 9, wherein said plurality of electronic devices constitutes a network information processing system and a plurality of said network information processing systems is connected to each other to process information.

17. A network information processing system in which a plurality of network-constituent electronic devices is connected to a same network, comprising:
a plurality of network information processing systems; and
communication means for connecting said network information processing systems to each other,
wherein each of said network information processing systems comprises at least one information processor for processing arbitrary information and information provision management means for processing information including at least user information transferred from said information processor and providing electronic information contents; and
wherein said information provision management means permits said network information processing systems to exchange said user information with each other.

18. The network information processing system according to claim 17, wherein said information provision management means comprises:
a display for displaying an image based on information transferred from said information processor; and
an information processing assisting apparatus for assisting electronic information processing, said information processing including said display, based on an input operation instruction from said information processor.

19. The network information processing system according to claim 18, wherein said information processing assisting apparatus shares user information obtained by mutual exchange communication between said network information processing systems and controls a display of said information processors belonging to one network information processing system, to display user information of the information processor belonging to the other network information processing system thereon.

20. The network information processing system according to claim 18, wherein said information processing assisting apparatus controls a display of said information processors belonging to the same network information processing system, to display the user information obtained from the information processors belonging to the same network information processing system thereon.

21. An information processing method for processing information by connecting a plurality of network-constituent electronic devices to a same network, said method comprising the steps of:
connecting to each other by communication means a plurality of network information processing systems, said network information processing system comprising at least one information processor for processing arbitrary information and information provision management means for processing information including at least user information transferred from said information processor and providing electronic information contents; and
permitting said network information processing systems connected by said communication means to exchange said user information with each other.

22. The information processing method according to claim 21, wherein said information provision management means uses:
a display for displaying an image based on information transferred from said information processor; and
an information processing assisting apparatus for assisting electronic information processing, said information processing including said display, based on an input operation instruction from said information processor.

23. The information processing method according to claim 22, wherein said information processing assisting apparatus conducts control a display of the information processors belonging to one network information processing system, to display the user information obtained from the information processors belonging to another network information processing system thereon.

24. The information processing method according to claim 22, wherein said information processing assisting apparatus controls a display of the information processors belonging to the same network information processing system, to display the user information obtained from the information processors belonging to the same network information processing system thereon.

25. A network information processing system in which a plurality of network-constituent electronic devices is connected to a same network, comprising:
a plurality of network information processing systems; and
communication means for connecting said network information processing systems to each other,
wherein each of said network information processing systems comprises at least one information processor for processing arbitrary information and information provision management means for processing information including at least user information transferred from said information processor and providing electronic information contents; and
wherein said information provision management means permits said network information processing systems to exchange connection information about said electronic devices with each other.

26. The network information processing system according to claim 25, wherein unique identification information of a connection-destination electronic device is specified using an input operation function of said information processor.

27. The network information processing system according to claim 25, wherein information on device names and/or connection in said network-constituent electronic devices is registered in said information processing assisting apparatus.

28. The network information processing system according to claim 25, wherein said information provision management means comprises:
a display for displaying an image based on information transferred from said information processor; and
an information processing assisting apparatus for assisting electronic information processing, said information processing including said display, based on an input operation instruction from said information processor.

29. The network information processing system according to claim 28, wherein said information processing assisting apparatus manages connection information about said electronic devices belonging to the same network information processing system.

30. The network information processing system according to claim 28, wherein in said information processing assisting apparatus, connection information about said electronic devices is shared by mutual exchange communication between said network information processing systems to provide said connection information of said electronic devices to a user.

31. The network information processing system according to claim 28, wherein said information processing assisting apparatus shares user information obtained by mutual exchange communication between said network information processing systems and controls a display of said information processors belonging to one network information processing system, to display user information of the information processor belonging to the other network information processing system thereon.

32. The network information processing system according to claim 28, wherein said system incorporates an application for exchanging information independently, in said information processing assisting apparatus;
wherein said system receives an individual identification number of a connection destination when said network information processing system is connected remotely; and
wherein said system acquires information on names and/or connection of said electronic devices based on said individual identification number.

33. An information processing method for processing information by connecting a plurality of network-constituent electronic devices to a same network, said method comprising the steps of:
configuring each network information processing system to comprise at least one information processor for processing arbitrary information and information provision management means for processing information including at least user information transferred from said information processor and providing electronic information contents;
connecting a plurality of said network information processing systems to each other by communication means; and
mutually exchanging connection information about said electronic devices between said network information processing systems.

34. The information processing method according to claim 33, wherein an input operation function of said information processor is used to specify unique identification information of a connection-destination electronic device.

35. The information processing method according to claim 33, wherein information on device names and/or connection in said network-constituent electronic devices is registered in said information processing assisting apparatus.

36. The information processing method according to claim 33, wherein said information provision management means uses:
a display for displaying an image based on information transferred from said information processor; and
an information processing assisting apparatus for assisting electronic information processing, said information processing including said display, based on an input operation instruction from said information processor.

37. The information processing method according to claim 36, wherein said information processing assisting apparatus manages connection information about said electronic devices belonging to the same information processing method.

38. The information processing method according to claim 36, wherein in said information processing assisting apparatus, connection information about said electronic devices is shared by mutual exchange communication between said information processing methods to provide said connection information of said electronic devices to a user.

39. The information processing method according to claim 36, wherein said information processing assisting apparatus shares user information obtained by mutual exchange communication between said information processing methods and controls a display of said information processors belonging to one network information processing system, to display user information of the information processor belonging to the other network information processing system thereon.

40. The information processing method according to claim 36, comprising the steps of:
incorporating an application for exchanging information independently, in said information processing assisting apparatus;
receiving an individual identification number of the connection-destination information processing assisting apparatus when said network information processing system is connected remotely; and
acquiring information on names and/or connection of said electronic devices based on said individual identification number.

41. A network information processing system in which a plurality of network-constituent electronic devices is connected to a same network, comprising:
a plurality of network information processing systems; and
communication means for connecting said network information processing systems to each other,
wherein each of said network information processing systems comprises at least one information processor for processing arbitrary information and information provision management means for processing at least information transferred from said information processor and providing electronic information contents including display information; and
wherein said information provision management means conducts display-synchronized remote control based on input operation by said information processor.

42. The network information processing system according to claim 41, wherein by said synchronized-display remote control, control information indicating "to shut down information of all images displayed currently" or "to transfer new information to display electronic information contents" is output from said information processor to said information provision management means.

43. The network information processing system according to claim 41, wherein said information provision management means comprises:
a display for displaying an image based on information transferred from said information processor; and
an information processing assisting apparatus for assisting electronic information processing, said information processing including said display, based on an input operation instruction from said information processor.

44. The network information processing system according to claim 43, wherein an input operation function of said information processor is used to transfer said control information to the connection-destination information processing assisting apparatus.

45. An information processing method for processing information by connecting a plurality of network-constituent electronic devices to a same network, said method comprising the steps of:
configuring a plurality of network information processing system, each processing system including at least one information processor having an input operation function to process arbitrary information and information provision management means for processing information transferred from said information processor and providing electronic information contents including display information;
connecting said plurality of network information processing systems by communication means; and
conducting display-synchronized remote control on said information provision management means based on input operation by said information processor.

46. The information processing method according to claim 45, wherein by said synchronized-display remote control, control information indicating "to shut down information of all images displayed currently" or "to transfer new information to display electronic information contents" is output from said information processor to said information provision management means.

47. The information processing method according to claim 45, wherein said information provision management means uses:
a display for displaying an image based on information transferred from said information processor; and
an information processing assisting apparatus for assisting electronic information processing, said information processing including said display, based on an input operation instruction from said information processor.

48. The information processing method according to claim 47, wherein an input operation function of said information processor is used to transfer said control information to the connection-destination information processing assisting apparatus.
